# EUROPEAN PATENT APPLICATION

(11) **EP 4 819 504 A1**
(43) Date of publication of application: **07.10.2026**
(21) Application number: 25213777.3
(22) Date of filing: 05.11.2025
(51) Int. Cl.: H04B 7/0404, H04B 1/00, H04B 1/04, H04B 7/06

(54) **TERMINAL FOR PERFORMING TRANSMISSION SWITCHING AND OPERATION METHOD THEREOF**

(30) Priority: 01.04.2025 KR 20250042150
(71) Applicant: Samsung Electronics Co., Ltd., Suwon-si, Gyeonggi-do 16677 (KR)
(72) Inventor: SEO, Heejin, 16677 Suwon-si (KR); YEON, Hae-Dong, 16677 Suwon-si (KR); YU, Hyunseok, 16677 Suwon-si (KR); LEE, Byongok, 16677 Suwon-si (KR)
(74) Representative: Marks & Clerk LLP

(57) **Abstract**

A terminal (100) comprises a transceiver (1320), transmission signal processing blocks (1340) comprising a plurality of first transmission signal processing blocks in a first transmission signal processing block group (300; 340) and a plurality of second transmission signal processing blocks in a second transmission signal processing block group (320), and a processor (1360), and the processor (1360) is configured to transmit, to a base station (200), a first signal through the first transmission signal processing block group (300; 340), activate, based on transmission configuration information received from the base station (200), at least one of the plurality of second transmission signal processing blocks, and based on completion of the transmitting of the first signal, transmit, to the base station (200), a second signal associated with the first signal through the second transmission signal processing block group (320), based on scheduling information received from the base station (200).

## Description

### BACKGROUND

### 1. Field

The present disclosure relates generally to communication systems, and more particularly, to a terminal for performing transmission switching and an operation method thereof.

### 2. Description of Related Art

In the Third Generation Partnership Project (3GPP) new radio (NR) system, transmission (Tx) switching and sounding reference signal (SRS) carrier switching are core technologies that may increase uplink and downlink data transmission rates by overcoming various limitations of terminals, and the significance thereof is gradually emerging. Consequently, such technologies may be considered as significant components for potentially providing higher performance and/or flexibility in subsequent communication environments, such as, but not limited to, the fifth generation (5G) or next generation communication environments.

A switching manner of the related art may have an operational structure in which multiple carriers share limited transmission signal processing blocks. In this manner, a task of changing a configuration of a related block based on a feature of each carrier in real time is performed, and since each carrier has different features and/or requirements, a predetermined time for a configuration change, and/or a switching gap, may be required. For example, there may be a relatively high probability that the time required to change configurations may proportionally increase as the number of shared blocks increase, which may negatively impact network performance. Further, as the transmission signal processing blocks are shared, a resource conflict, a synchronization delay, and/or a processing priority issue may frequently occur, which may lead to decreases in system performance and/or operational efficiency.

Furthermore, due to a structural characteristic of carriers sharing a fixed antenna, a poor channel state of a specific carrier for a corresponding antenna thereof may cause a decline in communication performance. Such declines and decreases in system performance and/or operational efficiency may constrain a communication system from providing stable data transmission and/or communication quality.

### SUMMARY

Example embodiments of the present disclosure provide a terminal for efficiently performing transmission (Tx) switching using limited hardware resources and an operation method thereof.

Embodiments of the present disclosure are not be limited to the technical tasks described above, and other technical tasks may be inferred from the embodiments described below.

According to an aspect of the present disclosure, a terminal comprises, a transceiver, transmission signal processing blocks comprising a plurality of first transmission signal processing blocks in a first transmission signal processing block group and a plurality of second transmission signal processing blocks in a second transmission signal processing block group, and a processor. The processor is configured to transmit, to a base station, a first signal through the first transmission signal processing block group, activate, based on transmission configuration information received from the base station, at least one of the plurality of second transmission signal processing blocks, and based on completion of the transmitting of the first signal, transmit, to the base station, a second signal associated with the first signal through the second transmission signal processing block group, based on scheduling information received from the base station.

According to an aspect of the present disclosure, an operation method of a terminal comprises, transmitting, to a base station, a first signal through a first transmission signal processing block group comprising a plurality of first transmission signal processing blocks from among transmission signal processing blocks of the terminal, activating, based on transmission configuration information received from the base station, at least one of a plurality of second transmission signal processing blocks comprised in a second transmission signal processing block group of the terminal, and based on completing the transmitting of the first signal, transmitting, to the base station, a second signal associated with the first signal through the second transmission signal processing block group based on scheduling information received from the base station.

According to an aspect of the present disclosure, a wireless communication system comprises a terminal comprising transmission signal processing blocks comprising a plurality of first transmission signal processing blocks in a first transmission signal processing block group and a plurality of second transmission signal processing blocks in a second transmission signal processing block group and a base station. The base station is configured to transmit transmission configuration information and scheduling information to the terminal. The terminal is configured to transmit, to the base station, a first signal through the first transmission signal processing block group, activate, based on the transmission configuration information received from the base station, at least one of the plurality of second transmission signal processing blocks, and based on completion of the transmitting of the first signal, transmit, to the base station, a second signal associated with the first signal through the second transmission signal processing block group, based on the scheduling information received from the base station.

According to example embodiments, a terminal may use an independent transmission signal processing block group for each layer when transmitting a signal to a base station, thereby potentially decreasing an unnecessary switching gap generated in Tx switching. Consequently, the terminal may transmit a signal for a corresponding time, potentially decreasing transmission latency and/or increasing signal throughput.

Further, according to example embodiments, a terminal may change a transmission signal processing block group to switch to a high-quality channel, thereby potentially enhancing spectral efficiency and channel capacity, and thus, potentially increasing data throughput.

Further, according to example embodiments, a terminal may implement transmission diversity using an extra transmission signal processing block group, thereby potentially enhancing quality and stability in transmission signals. In particular, the terminal may allocate additional power through a diversity path, which may expand uplink coverage, increase a signal-to-noise ratio (SNR), potentially enhance spectral efficiency.

Further, according to example embodiments, a terminal may implement Tx switching by sharing a hardware block, including in an environment with hardware limitations, which may ensure resources for operating each carrier independently, through which complexity of hardware management may decrease and resource interference may be minimized.

Further, according to example embodiments, a terminal may introduce time division multiplexing to allow each carrier to occupy a block only for a specific time, clarifying resource distribution and priority setting and decreasing a possibility of a scheduling conflict.

Effects of example embodiments are not limited to those described above, and other effects not mentioned herein may be clearly understood by those skilled in the art from the appended claims.

At least some of the above and other features of the invention are set out in the claims.

### BRIEF DESCRIPTION OF THE DRAWINGS

The above and/or other aspects, features, and advantages of certain embodiments of the present disclosure may be more apparent and more readily appreciated from the following description taken in conjunction with the accompanying drawings, in which:
FIG. 1 shows a system, according to an example embodiment;
FIGS. 2, 3A, 3B, 4A, 4B, 5A, 5B, 6A, 6B, 7A, 7B, 8A, 8B, 9A, 9B, 10A, 10B, and 11 are diagrams for illustrating processes of transmission (Tx) switching performed by a terminal, according to various example embodiments;
FIG. 12 is a flowchart of an operation method of a terminal, according to an example embodiment; and
FIG. 13 is a block diagram of a terminal, according to an example embodiment.

### DETAILED DESCRIPTION

Terms used in example embodiments are selected from currently widely used general terms when possible while considering the functions in the present disclosure. However, the terms may vary depending on the intention of a person skilled in the art, precedents, the advent of new technology, or the like. Further, in particular cases, there are also terms arbitrarily selected by the Applicant, and in these cases, the meaning may be described in the corresponding descriptions. Therefore, the terms used in the present disclosure are not to be construed simply as their designations but based on the meanings of the terms and the overall context of the present disclosure.

Throughout the present disclosure, when a part is described as "comprising or including" a component, it does not exclude another component but may further include another component unless otherwise stated.

The expression "at least one of a, b, and c" described throughout the present disclosure may include "a alone," "b alone," "c alone," "a and b," "a and c," "b and c," or "all of a, b, and c." As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wired), wirelessly, or via a third element.

Reference throughout the present disclosure to "one embodiment," "an embodiment," "an example embodiment," or similar language may indicate that a particular feature, structure, or characteristic described in connection with the indicated embodiment is included in at least one embodiment of the present solution. Thus, the phrases "in one embodiment", "in an embodiment," "in an example embodiment," and similar language throughout this disclosure may, but do not necessarily, all refer to the same embodiment. The embodiments described herein are example embodiments, and thus, the disclosure is not limited thereto and may be realized in various other forms.

It is to be understood that the specific order or hierarchy of blocks in the processes/flowcharts disclosed are an illustration of example approaches. Based upon design preferences, it is understood that the specific order or hierarchy of blocks in the processes/flowcharts may be rearranged. Further, some blocks may be combined or omitted. The accompanying claims present elements of the various blocks in a sample order, and are not meant to be limited to the specific order or hierarchy presented.

The embodiments herein may be described and illustrated in terms of blocks, as shown in the drawings, which carry out a described function or functions. These blocks, which may be referred to herein as units or modules or the like, or by names such as device, logic, circuit, controller, counter, comparator, generator, converter, or the like, may be physically implemented by analog and/or digital circuits including one or more of a logic gate, an integrated circuit, a microprocessor, a microcontroller, a memory circuit, a passive electronic component, an active electronic component, an optical component, and the like.

In the present disclosure, the articles "a" and "an" are intended to include one or more items, and may be used interchangeably with "one or more." Where only one item is intended, the term "one" or similar language is used. For example, the term "a processor" may refer to either a single processor or multiple processors. When a processor is described as carrying out an operation and the processor is referred to perform an additional operation, the multiple operations may be executed by either a single processor or any one or a combination of multiple processors.

As used herein, a "terminal" may be implemented as a computer or a portable terminal capable of accessing a server or another terminal through a network. Here, the computer may include, for example, a notebook, a desktop computer, and/or a laptop computer which may be equipped with a web browser. The portable terminal may be and/or may include a wireless communication apparatus ensuring portability and mobility and include any type of handheld wireless communication apparatus, for example, a tablet personal computer (PC), a smartphone, or a communication-based terminal such as, but not limited to, international mobile telecommunication (IMT), code division multiple access (CDMA), W-code division multiple access (W-CDMA), and long term evolution (LTE).

Hereinafter, example embodiments of the present disclosure are described with reference to the accompanying drawings so that those of ordinary skill in the art to which the present disclosure pertains may easily implement the example embodiments. However, the present disclosure may be implemented in many different forms and is not limited to the example embodiments described herein.

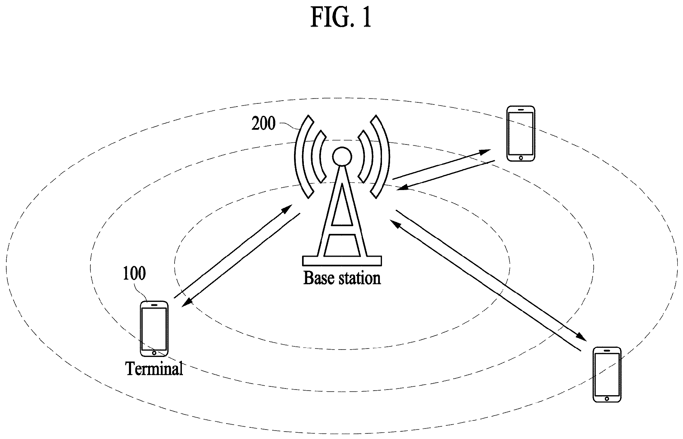

FIG. 1 shows a system, according to an example embodiment.

Referring to FIG. 1, a wireless communication system may include one or more terminals 100 and a base station 200. In the system of FIG. 1, only elements related to the example embodiments may be shown. Therefore, it may be understood by those of ordinary skill in the art to which the example embodiments pertain that other general-purpose elements may be further included in addition to the elements illustrated in FIG. 1.

According to an example embodiment, the terminal 100 may be and/or may include a wireless communication apparatus and may refer to various apparatuses that may communicate with the base station 200 to transmit and/or receive data and/or control information. For example, the terminal 100 may include, but not be limited to, user equipment (UE), a mobile station (MS), a mobile terminal (MT), a user terminal (UT), a subscribe station (SS), a wireless apparatus, a portable apparatus, or the like.

According to an example embodiment, the base station 200 may refer to a fixed station that may communicate with the terminal 100 and/or another base station to transmit and/or receive data and/or control information. For example, the base station 200 may include Node B, next generation Node B (gNB), evolved-Node B (eNB), a base transceiver system (BTS), an access point (AP), or the like.

According to an example embodiment, the terminal 100 may communicate with the base station 200 within cell coverage of the base station 200. For example, the terminal 100 and the base station 200 may communicate through a downlink channel and/or an uplink channel. When communicating through the downlink channel, the terminal 100 and the base station 200 may correspond to a wireless receiver and a wireless transmitter, respectively, and when communicating through the uplink channel, the terminal 100 and the base station 200 may correspond to a wireless transmitter and a wireless receiver, respectively.

According to an example embodiment, a wireless communication network between the terminal 100 and the base station 200 may support communication between multiple users by sharing available network resources. In the wireless communication network, information may be transferred in various manners such as, but not limited to, CDMA, frequency division multiple access (FDMA), time division multiple access (TDMA), orthogonal frequency division multiple access (OFDMA), single carrier frequency division multiple access (SC-FDMA), or the like.

According to an example embodiment, the terminal 100 may transmit an uplink signal (ULS) that may include data to the base station 200 through at least one antenna port. For example, the terminal 100 may pre-code a data signal (and/or data symbol) and a reference signal (and/or reference symbol) and transmit pre-coded data signals and/or pre-coded reference signals to the base station 200 through the downlink channel.

In an embodiment, the reference signal may be and/or may include a signal used for channel estimation of the data signal and may be referred to as a pilot. For example, the reference signal may include a sounding reference signal (SRS). However, embodiments of the present disclosure are not limited in this regard, and the reference signal may include various types of signals in addition to the signal described above.

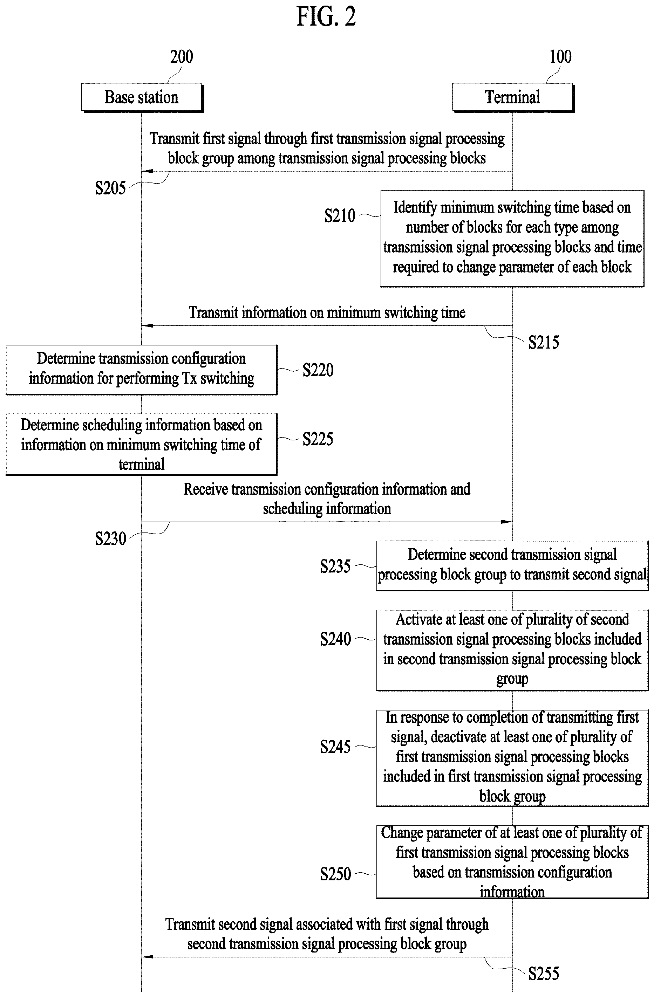

FIG. 2 is a diagram for illustrating a process of transmission (Tx) switching performed by the terminal 100, according to an example embodiment. In some embodiments, at least a portion of the process of Tx switching may be performed by the terminal 100. Alternatively or additionally another computing device (e.g., a UE, a server, a laptop, a smartphone, a camera, a wearable device, a smart device, a television (TV), a printer, an Internet-of-Things (IoT) device, or the like) may perform at least a portion of the process of Tx switching depicted in FIG. 2. For example, in some embodiments, the terminal 100 and the other computing device may perform the process of Tx switching in conjunction. That is, the terminal 100 may perform a portion of the process and a remaining portion of the process may be performed by one or more other computing devices.

In operation S205, according to an example embodiment, the terminal 100 transmits a first signal to the base station 200 through a first transmission signal processing block group from among transmission signal processing blocks. For example, the terminal 100 may configure parameters of a first encoding block, a first modulation block, a first digital signal filtering block, a first digital-to-analog conversion (DAC) block, a first radio frequency integrated circuit (RFIC) block, a first power amplifying (PA) block, a first antenna block, and a first power supply block included in the first transmission signal processing block group based on transmission configuration information received from the base station 200. Subsequently, the terminal 100 may transmit a data signal such as, but not limited to, a physical uplink shared channel (PUSCH) signal or a reference signal such as an SRS used by a base station to measure a channel state of a terminal to the base station 200 using the first transmission signal processing block group.

In operation S210, according to an example embodiment, the terminal 100 may identify a minimum switching time based on the number of blocks for each type among the transmission signal processing blocks and the time required to change a parameter of each block. For example, the terminal 100 may identify a type with the fewest number among an encoding block, a modulation block, a digital signal filtering block, a DAC block, an RFIC block, a PA block, an antenna block, and a power supply block included in the transmission signal processing blocks and determine the longest (e.g., maximum) time among times required to change a parameter of each of transmission signal processing blocks of the identified type to be the minimum switching time of the terminal 100 or a switching gap.

According to an example embodiment, the terminal 100 may determine the minimum switching time of the terminal 100 for each type of Tx switching. That is, the terminal 100 may determine the minimum switching time of the terminal 100 differently when changing a frequency, when performing beam switching, or when performing handover.

For example, if the base station 200 vacates a specific frequency band or reallocates a frequency resource to move from an existing frequency to a new frequency, or if the terminal 100 detects higher quality in a new frequency band and is instructed to change to a corresponding frequency by the base station 200, the terminal 100 may identify a type with the fewest number among the encoding block, the modulation block, the digital signal filtering block, the DAC block, the RFIC block, the PA block, and the power supply block. Subsequently, the terminal 100 may determine the longest time among times required to change a parameter of each of transmission signal processing blocks of the identified type to be the minimum switching time of the terminal 100.

As another example, if beam switching is performed to select another beam depending on a terminal location change, interference, and a change in a multipath characteristic, the terminal 100 may determine the time required to change a parameter of the antenna block to be the minimum switching time of the terminal 100.

As another example, if the terminal 100 moves and changes transmission to another base station and/or another frequency band (e.g., if inter-frequency handover or intra-frequency handover is performed), the terminal 100 may identify a type with the fewest number among the encoding block, the digital signal filtering block, the DAC block, the RFIC block, the PA block, and the power supply block. Subsequently, the terminal 100 may determine the longest time among times required to change a parameter of each of transmission signal processing blocks of the identified type to be the minimum switching time of the terminal 100.

As another example, if the terminal 100 performs switching between time division duplex (TDD) and frequency division duplex (FDD), the terminal 100 may identify a type with the fewest number among the encoding block, the modulation block, the digital signal filtering block, the DAC block, the RFIC block, the PA block, and the power supply block. Subsequently, the terminal 100 may determine the longest time among times required to change a parameter of each of transmission signal processing blocks of the identified type to be the minimum switching time of the terminal 100.

However, the above descriptions are merely examples of embodiments, and the terminal 100 may determine the minimum switching time of the terminal 100 for a case not described above from among various cases of performing Tx switching and may determine the minimum switching time of the terminal 100 for the above-described cases in a manner different from the manner described above.

In operation S215, according to an example embodiment, the terminal 100 may transmit information on the minimum switching time to the base station 200. For example, the terminal 100 may transmit information on the switching gap and/or information on the switching gap determined for each type of Tx switching to the base station 200.

According to an example embodiment, the terminal 100 may transmit a request for Tx switching to the base station 200. For example, if the terminal 100 determines that switching to a frequency of higher quality is needed due to a channel state change, if it is determined that satisfying a specific quality of service (QoS) requirement is difficult, or if a conflict between an uplink and a downlink occurs in the dynamic TDD environment, the terminal 100 may request the base station 200 to switch a transmission frequency.

In operation S220, according to an example embodiment, the base station 200 may determine transmission configuration information for performing Tx switching. That is, if a set condition is satisfied, or when the request for Tx switching is received from the terminal 100, the base station 200 may determine the transmission configuration information for performing Tx switching.

For example, if the base station 200 newly allocates a frequency resource, instructs beam switching, instructs handover, or instructs switching between TDD and FDD, the base station 200 may determine a frequency band used by the terminal 100 to transmit a signal and a transmission and reception manner.

As another example, when the request for Tx switching is received from the terminal 100, the base station 200 may determine a frequency band used by the terminal 100 to transmit a signal and a transmission and reception manner.

In operation S225, according to an example embodiment, the base station 200 may determine scheduling information based on the information on the minimum switching time of the terminal 100. For example, in order for the terminal 100 to transmit a signal again after the minimum switching time, the base station 200 may determine the scheduling information including transmission timing based on a corresponding time interval and resource allocation information. In such a manner, the base station 200 may allocate an appropriate resource, so that the terminal 100 may start to transmit the first signal again at a time point when a predetermined minimum switching time elapses after transmitting the first signal is completed, and may optimize a transmission cycle to increase transmission efficiency.

In operation S230, according to an example embodiment, the terminal 100 may receive the transmission configuration information and the scheduling information from the base station 200. For example, the base station 200 may transmit a control message and/or a radio resource control (RRC) message including the transmission configuration information and control information and/or downlink control information (DCI) including the scheduling information to the terminal 100.

In operation S235, according to an example embodiment, the terminal 100 may determine a second transmission signal processing block group to transmit a second signal. That is, the terminal 100 may determine, based on the transmission configuration information received from the base station 200 and the number of blocks for each type among the transmission signal processing blocks, a plurality of second transmission signal processing blocks for transmitting the second signal after Tx switching.

For example, the terminal 100 may identify that parameters of the encoding block, the modulation block, the digital signal filtering block, the DAC block, the RFIC block, the PA block, and the power supply block may be changed in order to change a frequency based on the transmission configuration information received from the base station 200. Furthermore, the terminal 100 may identify that a second encoding block, a second modulation block, a second digital signal filtering block, a second DAC block, a second RFIC block, a second PA block, and a second power supply block among the transmission signal processing blocks need not be used. Accordingly, the terminal 100 may determine to transmit the second signal through the second encoding block, the second modulation block, the second digital signal filtering block, the second DAC block, the second RFIC block, the second PA block, and the second power supply block, which need not be used, and the first antenna block with no parameter change.

As another example, the terminal 100 may identify that the parameters of the encoding block, the modulation block, the digital signal filtering block, the DAC block, the RFIC block, the PA block, and the power supply block may be changed in order to change a transmission manner based on the transmission configuration information received from the base station 200. Furthermore, the terminal 100 may identify that the second encoding block, the second modulation block, the second RFIC block, and the second PA block among the transmission signal processing blocks need not be used and may determine to use the first digital signal filtering block, the first DAC block, and the first power supply block by changing the parameters thereof. Accordingly, the terminal 100 may determine to transmit the second signal through the first digital signal filtering block, the first DAC block, and the first power supply block, with parameter changes, together with the second encoding block, the second modulation block, the second RFIC block, and the second PA block, which need not be used, and the first antenna block with no parameter change.

As another example, the terminal 100 may identify that the antenna block may be changed in order to perform beam switching based on the transmission configuration information received from the base station 200. Furthermore, the terminal 100 may identify that a second antenna block among the transmission signal processing blocks is not used. Accordingly, the terminal 100 may determine to transmit the second signal through the second antenna block, which is not used, and the first encoding block, the first modulation block, the first digital signal filtering block, the first DAC block, the first RFIC block, the first PA block, and the first power supply block, with no parameter change.

In operation S240, according to an example embodiment, the terminal 100 activates at least one of the plurality of second transmission signal processing blocks included in the second transmission signal processing block group. That is, the terminal 100 may activate a transmission signal processing block that is not used to transmit the first signal among transmission signal processing blocks determined to be the second transmission signal processing block group.

For example, the terminal 100 may activate the second encoding block, the second modulation block, the second digital signal filtering block, the second DAC block, the second RFIC block, the second PA block, and the second power supply block, which need not be used to transmit the first signal, among the second encoding block, the second modulation block, the second digital signal filtering block, the second DAC block, the second RFIC block, the second PA block, the second power supply block, and the first antenna block, which may be determined to be the second transmission signal processing block group.

As another example, the terminal 100 may activate the second encoding block, the second modulation block, the second RFIC block, and the second PA block, which may not have been used to transmit the first signal, among the second encoding block, the second modulation block, the second RFIC block, the second PA block, the first digital signal filtering block, the first DAC block, the first antenna block, and the first power supply block, which may be determined to be the second transmission signal processing block group.

As another example, the terminal 100 may activate the second antenna block, which is not used to transmit the first signal, among the second antenna block, the first encoding block, the first modulation block, the first digital signal filtering block, the first DAC block, the first RFIC block, the first PA block, and the first power supply block, which may be determined to be the second transmission signal processing block group.

In such an example, activating a block may include changing a block to be in a state for transmitting a signal and may include not only supplying power and configuring a parameter but also initializing an internal operation for processing transmission signals and preparing related resources (e.g., timing synchronization, data buffering, and signal conditioning) so that the block may perform a transmission task. However, embodiments of the present disclosure are not be limited to the above description.

In operation S245, according to an example embodiment, the terminal 100 may deactivate, in response to completion of the transmitting of the first signal, at least one of a plurality of first transmission signal processing blocks included in the first transmission signal processing block group. That is, the terminal 100 may deactivate a transmission signal processing block not included in the second transmission signal processing block group among the plurality of first transmission signal processing blocks.

For example, the terminal 100 may deactivate the first encoding block, the first modulation block, the first digital signal filtering block, the first DAC block, the first RFIC block, the first PA block, and the first power supply block, which need not be included in the second transmission signal processing block group, among the first encoding block, the first modulation block, the first digital signal filtering block, the first DAC block, the first RFIC block, the first PA block, the first antenna block, and the first power supply block.

As another example, the terminal 100 may deactivate the first encoding block, the first modulation block, the first RFIC block, and the first PA block, which need not be included in the second transmission signal processing block group, among the first encoding block, the first modulation block, the first digital signal filtering block, the first DAC block, the first RFIC block, the first PA block, the first antenna block, and the first power supply block.

As another example, the terminal 100 may deactivate the first antenna block, which is not included in the second transmission signal processing block group, among the first encoding block, the first modulation block, the first digital signal filtering block, the first DAC block, the first RFIC block, the first PA block, the first antenna block, and the first power supply block.

In operation S250, according to an example embodiment, the terminal 100 may change a parameter of at least one of the plurality of first transmission signal processing blocks based on the transmission configuration information. That is, the terminal 100 may identify a transmission signal processing block that is not deactivated among the plurality of first transmission signal processing blocks and change a parameter of the identified transmission signal processing block based on the transmission configuration information.

For example, the terminal 100 may identify the first antenna block, which is not deactivated, among the first encoding block, the first modulation block, the first digital signal filtering block, the first DAC block, the first RFIC block, the first PA block, the first antenna block, and the first power supply block. Subsequently, the terminal 100 may identify that the parameter of the antenna block need not be changed in order to change a frequency based on the transmission configuration information received from the base station 200 and omit an operation of changing the parameter.

As another example, the terminal 100 may identify the first digital signal filtering block, the first DAC block, the first antenna block, and the first power supply block, which need not be deactivated, among the first encoding block, the first modulation block, the first digital signal filtering block, the first DAC block, the first RFIC block, the first PA block, the first antenna block, and the first power supply block. Subsequently, the terminal 100 may identify that the parameters of the digital signal filtering block, the DAC block, and the power supply block may be changed in order to change a transmission manner based on the transmission configuration information received from the base station 200 and change the parameters of the first digital signal filtering block, the first DAC block, and the first power supply block.

As another example, the terminal 100 may identify the first encoding block, the first modulation block, the first digital signal filtering block, the first DAC block, the first RFIC block, the first PA block, and the first power supply block, which need not be deactivated, among the first encoding block, the first modulation block, the first digital signal filtering block, the first DAC block, the first RFIC block, the first PA block, the first antenna block, and the first power supply block. Subsequently, the terminal 100 may identify that the parameters of the encoding block, the modulation block, the digital signal filtering block, the DAC block, the RFIC block, the PA block, and the power supply block need not be changed in order to perform beam switching based on the transmission configuration information received from the base station 200 and omit an operation of changing the parameters.

In operation S255, according to an example embodiment, the terminal 100 transmits the second signal associated with the first signal to the base station 200 through the second transmission signal processing block group. That is, the terminal 100 may transmit the second signal to the base station 200 at a time point that is set based on the scheduling information received from the base station 200.

For example, the terminal 100 may transmit the second signal to the base station 200 using the second encoding block, the second modulation block, the second digital signal filtering block, the second DAC block, the second RFIC block, the second PA block, the first antenna block, and the second power supply block.

As another example, the terminal 100 may transmit the second signal to the base station 200 using the second encoding block, the second modulation block, the first digital signal filtering block, the first DAC block, the second RFIC block, the second PA block, the first antenna block, and the first power supply block.

As another example, the terminal 100 may transmit the second signal to the base station 200 using the first encoding block, the first modulation block, the first digital signal filtering block, the first DAC block, the first RFIC block, the first PA block, the second antenna block, and the first power supply block.

While FIG. 2 illustrates that operation S210 through operation S230 may be performed after operation S205 is performed, this is merely an example embodiment, and a performing sequence may be different therefrom. For example, the terminal 100 may perform operation S205 after performing operations S210 through S230 and/or perform operation S205 between operation S210 and operation S230.

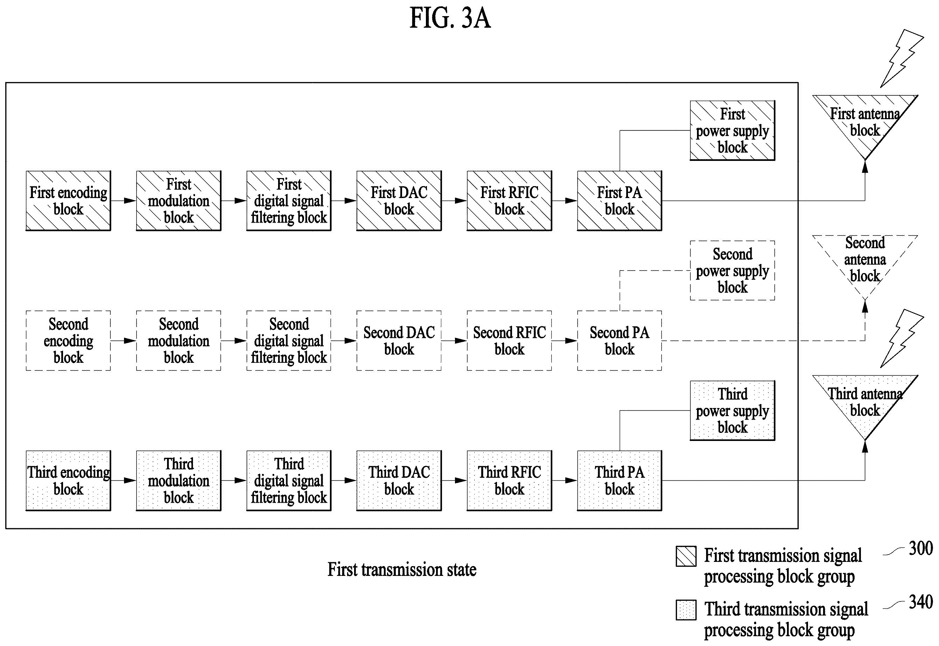

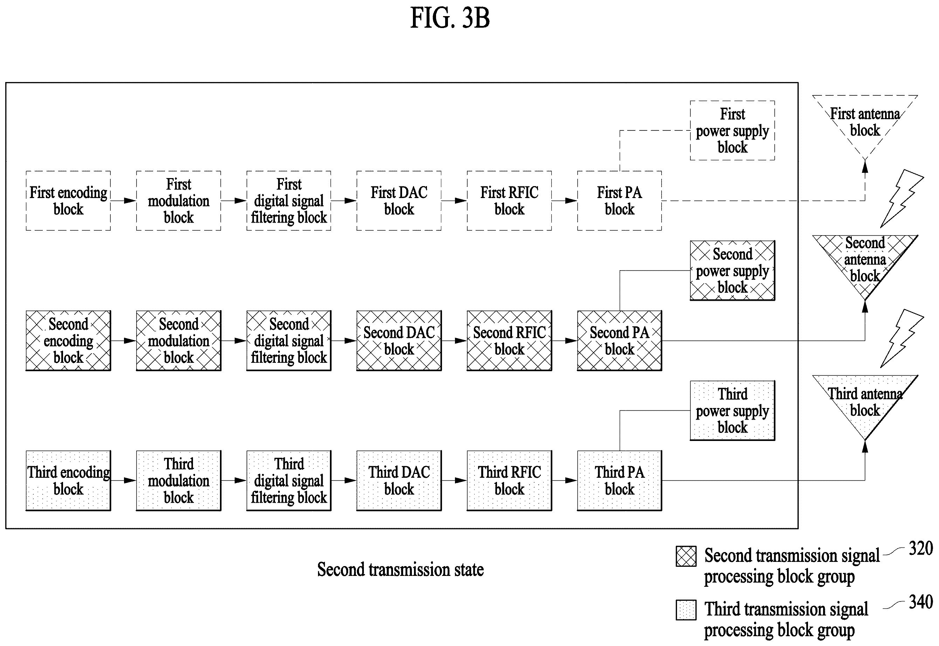

FIGS. 3A and 3B are diagrams for illustrating a process of Tx switching performed by the terminal 100, according to an example embodiment. The process of Tx switching depicted in FIGS. 3A and 3B may include and/or may be similar in many respects to the process of Tx switching described above with reference to FIG. 2, and may include additional features not mentioned above. Consequently, repeated descriptions of the process of Tx switching described above with reference to FIG. 2 may be omitted for the sake of brevity.

According to an example embodiment, the terminal 100 may transmit a signal to the base station 200 through transmission signal processing blocks. For example, referring to FIG. 3A, the terminal 100 may transmit the signal to the base station 200 through a first transmission signal processing block group 300 including a first encoding block, a first modulation block, a first digital signal filtering block, a first DAC block, a first RFIC block, a first PA block, a first antenna block, and a first power supply block. Alternatively, the terminal 100 may transmit the signal to the base station 200 through a third transmission signal processing block group 340 including a third encoding block, a third modulation block, a third digital signal filtering block, a third DAC block, a third RFIC block, a third PA block, a third antenna block, and a third power supply block.

According to an example embodiment, the terminal 100 may identify a minimum switching time based on the number of blocks for each type among the transmission signal processing blocks and the time required to change a parameter of each block. For example, referring to FIG. 3A, the terminal 100 may identify that three (3) encoding blocks, three (3) modulation blocks, three (3) digital signal filtering blocks, three (3) DAC blocks, three (3) RFIC blocks, three (3) PA blocks, three (3) antenna blocks, and three (3) power supply blocks may be present and determine the longest time among times required to change parameters of the encoding block, the modulation block, the digital signal filtering block, the DAC block, the RFIC block, the PA block, the antenna block, and the power supply block to be the minimum switching time of the terminal 100.

According to an example embodiment, the terminal 100 may transmit information on the minimum switching time to the base station 200. For example, the terminal 100 may transmit information on a switching gap and/or information on the switching gap determined for each type of Tx switching to the base station 200.

According to an example embodiment, the terminal 100 receives transmission configuration information and scheduling information from the base station 200. For example, the base station 200 may transmit a control message and/or an RRC message including the transmission configuration information and control information and/or DCI including the scheduling information to the terminal 100.

According to an example embodiment, the terminal 100 may determine a second transmission signal processing block group 320 to transmit a signal subsequent to Tx switching. For example, it may be identified that the parameters of the encoding block, the modulation block, the digital signal filtering block, the DAC block, the RFIC block, the PA block, the antenna block, and the power supply block may be changed based on the transmission configuration information received from the base station 200. Further, referring to FIG. 3A, the terminal 100 may identify that a second encoding block, a second modulation block, a second digital signal filtering block, a second DAC block, a second RFIC block, a second PA block, a second antenna block, and a second power supply block among the transmission signal processing blocks which need not be used. Accordingly, the terminal 100 may determine to transmit the signal subsequent to Tx switching using the second encoding block, the second modulation block, the second digital signal filtering block, the second DAC block, the second RFIC block, the second PA block, the second antenna block, and the second power supply block, which need not be used.

According to an example embodiment, the terminal 100 activates at least one of a plurality of second transmission signal processing blocks included in the second transmission signal processing block group 320. For example, referring to FIGS. 3A and 3B, since all of the second encoding block, the second modulation block, the second digital signal filtering block, the second DAC block, the second RFIC block, the second PA block, the second antenna block, and the second power supply block, which may be determined to be the second transmission signal processing block group 320, need not be used to transmit the signal, the terminal 100 may activate all of the second encoding block, the second modulation block, the second digital signal filtering block, the second DAC block, the second RFIC block, the second PA block, the second antenna block and the second power supply block.

According to an example embodiment, the terminal 100 may deactivate, in response to completion of the transmitting of the signal, at least one of a plurality of first transmission signal processing blocks included in the first transmission signal processing block group 300. For example, since all of the first encoding block, the first modulation block, the first digital signal filtering block, the first DAC block, the first RFIC block, the first PA block, the first antenna block, and the first power supply block need not be included in the second transmission signal processing block group 320, the terminal 100 may deactivate all of the first encoding block, the first modulation block, the first digital signal filtering block, the first DAC block, the first RFIC block, the first PA block, the first antenna block, and the first power supply block.

According to an example embodiment, the terminal 100 may change a parameter of at least one of the plurality of first transmission signal processing blocks based on the transmission configuration information. For example, the terminal 100 may omit a process of changing the parameter by deactivating all of the first encoding block, the first modulation block, the first digital signal filtering block, the first DAC block, the first RFIC block, the first PA block, the first antenna block, and the first power supply block.

According to an example embodiment, the terminal 100 transmits the signal to the base station 200 through the second transmission signal processing block group 320. For example, referring to FIG. 3B, the terminal 100 may transmit the signal to the base station 200 using the second encoding block, the second modulation block, the second digital signal filtering block, the second DAC block, the second RFIC block, the second PA block, the second antenna block, and the second power supply block at a time point that is set based on the scheduling information received from the base station 200.

In an embodiment, the terminal 100 may set a state value corresponding to each transmission signal processing block group used to transmit a signal and perform Tx switching based on the set state value. For example, as illustrated in FIG. 3A, a state of transmitting a signal using the first transmission signal processing block group 300 and the third transmission signal processing block group 340 may be set as a first transmission state, and as illustrated in FIG. 3B, a state of transmitting a signal using the second transmission signal processing block group 320 and the third transmission signal processing block group 340 may be set as a second transmission state. Subsequently, the terminal 100 may perform Tx switching by retrieving a value of the second transmission state based on the configuration information received from the base station 200.

As described above, the terminal 100 may use an independent transmission signal processing block group for each layer when transmitting a signal to the base station 200, which may decrease an unnecessary switching that may be gap generated in Tx switching. In such a manner, a signal may be transmitted for a corresponding time, which may decrease transmission latency and/or increase signal throughput. Furthermore, the terminal 100 may change a transmission signal processing block group to switch to a high-quality channel, enhancing spectral efficiency and channel capacity, and thus, increasing data throughput. Further, the terminal 100 may implement transmission diversity using an extra transmission signal processing block group, greatly enhancing quality and stability in transmission signals. That is, additional power may be allocated through a diversity path, expanding uplink coverage, and an increase in a signal-to-noise ratio (SNR) may enhance spectral efficiency.

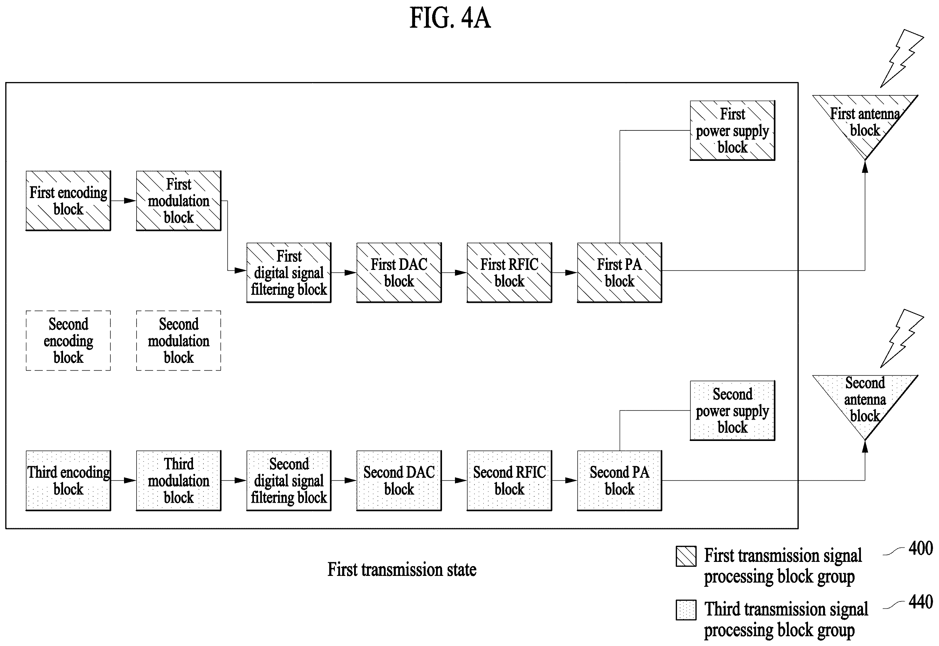

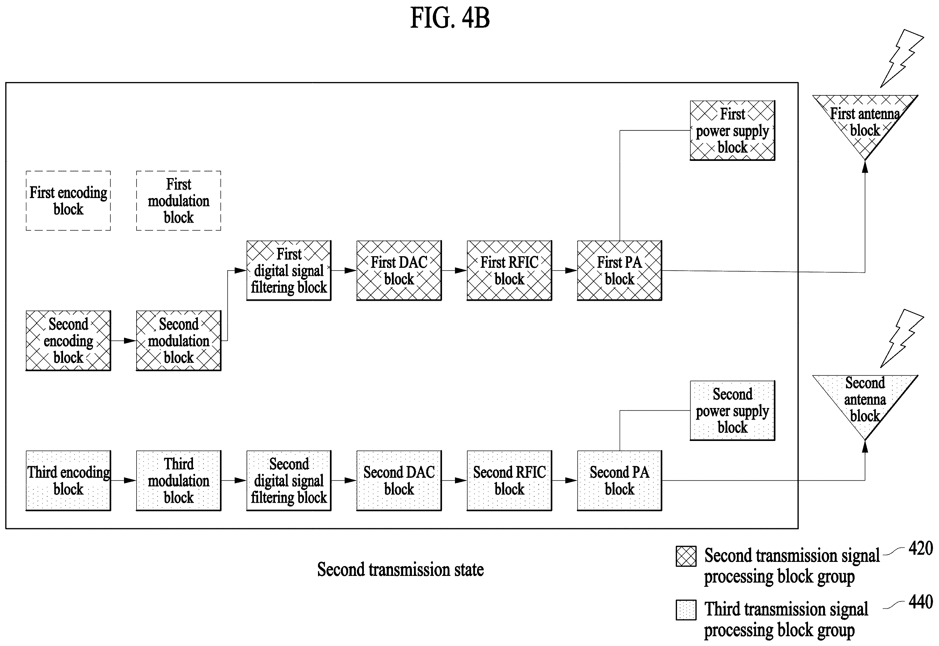

FIGS. 4A and 4B are diagrams for illustrating a process of Tx switching performed by the terminal 100, according to an example embodiment. The process of Tx switching depicted in FIGS. 4A and 4B may include and/or may be similar in many respects to the process of Tx switching described above with reference to FIG. 2, and may include additional features not mentioned above. Consequently, repeated descriptions of the process of Tx switching described above with reference to FIG. 2 may be omitted for the sake of brevity.

According to an example embodiment, the terminal 100 transmits a signal to the base station 200 through transmission signal processing blocks. For example, referring to FIG. 4A, the terminal 100 may transmit the signal to the base station 200 through a first transmission signal processing block group 400 including a first encoding block, a first modulation block, a first digital signal filtering block, a first DAC block, a first RFIC block, a first PA block, a first antenna block, and a first power supply block. Alternatively, the terminal 100 may transmit the signal to the base station 200 through a third transmission signal processing block group 440 including a third encoding block, a third modulation block, a second digital signal filtering block, a second DAC block, a second RFIC block, a second PA block, a second antenna block, and a second power supply block.

According to an example embodiment, the terminal 100 may identify a minimum switching time based on the number of blocks for each type among the transmission signal processing blocks and the time required to change a parameter of each block. For example, referring to FIG. 4A, the terminal 100 may identify that three (3) encoding blocks and three (3) modulation blocks may be present and two (2) digital signal filtering blocks, two (2) DAC blocks, two (2) RFIC blocks, two (2) PA blocks, two (2) antenna blocks, and two (2) power supply blocks may be present. Accordingly, the terminal 100 may determine the longest time among times required to change parameters of the digital signal filtering block, the DAC block, the RFIC block, the PA block, the antenna block, and the power supply block to be the minimum switching time of the terminal 100.

According to an example embodiment, the terminal 100 may transmit information on the minimum switching time to the base station 200. For example, the terminal 100 may transmit information on a switching gap and/or information on the switching gap determined for each type of Tx switching to the base station 200.

According to an example embodiment, the terminal 100 receives transmission configuration information and scheduling information from the base station 200. For example, the base station 200 may transmit a control message and/or an RRC message including the transmission configuration information and control information and/or DCI including the scheduling information to the terminal 100.

According to an example embodiment, the terminal 100 may determine a second transmission signal processing block group 420 to transmit a signal subsequent to Tx switching. For example, it may be identified that parameters of the encoding block, the modulation block, the digital signal filtering block, the DAC block, the RFIC block, the PA block, the antenna block, and the power supply block may be changed based on the transmission configuration information received from the base station 200. Further, referring to FIG. 4A, the terminal 100 may identify that a second encoding block and a second modulation block among the transmission signal processing blocks need not be used. Accordingly, the terminal 100 may determine to transmit the signal subsequent to Tx switching using the second encoding block and the second modulation block, which need not be used, and the first digital signal filtering block, the first DAC block, the first RFIC block, the first PA block, the first antenna block, and the first power supply block.

According to an example embodiment, the terminal 100 activates at least one of a plurality of second transmission signal processing blocks included in the second transmission signal processing block group 420. For example, referring to FIGS. 4A and 4B, since the second encoding block and the second modulation block, which may be determined to be the second transmission signal processing block group 420, need not be used to transmit the signal, the terminal 100 may activate the second encoding block and the second modulation block.

According to an example embodiment, the terminal 100 may deactivate, in response to completion of the transmitting of the signal, at least one of a plurality of first transmission signal processing blocks included in the first transmission signal processing block group 400. For example, since the first encoding block and the first modulation block need not be included in the second transmission signal processing block group 420, the terminal 100 may deactivate the first encoding block and the first modulation block.

According to an example embodiment, the terminal 100 may change a parameter of at least one of the plurality of first transmission signal processing blocks based on the transmission configuration information. For example, the terminal 100 may change parameters of the first digital signal filtering block, the first DAC block, the first RFIC block, the first PA block, the first antenna block, and the first power supply block based on the transmission configuration information received from the base station 200.

According to an example embodiment, the terminal 100 transmits the signal to the base station 200 through the second transmission signal processing block group 420. For example, referring to FIG. 4B, the terminal 100 may transmit the signal to the base station 200 using the second encoding block, the second modulation block, the first digital signal filtering block, the first DAC block, the first RFIC block, the first PA block, the first antenna block, and the first power supply block at a time point that is set based on the scheduling information received from the base station 200.

In an embodiment, the terminal 100 may set a state value corresponding to each transmission signal processing block group used to transmit a signal and perform Tx switching based on the set state value. For example, as illustrated in FIG. 4A, a state of transmitting a signal using the first transmission signal processing block group 400 and the third transmission signal processing block group 440 may be set as a first transmission state, and as illustrated in FIG. 4B, a state of transmitting a signal using the second transmission signal processing block group 420 and the third transmission signal processing block group 440 may be set as a second transmission state. Subsequently, the terminal 100 may perform Tx switching by retrieving a value of the second transmission state based on the configuration information received from the base station 200.

As described above, the terminal 100 may implement Tx switching by sharing a hardware block even in an environment with hardware limitations to ensure resources for operating each carrier independently, through which complexity of hardware management may decrease and resource interference may be minimized. Further, the terminal 100 may introduce time division multiplexing to allow each carrier to occupy a block only for a specific time, clarifying resource distribution and priority setting and decreasing the possibility of a scheduling conflict.

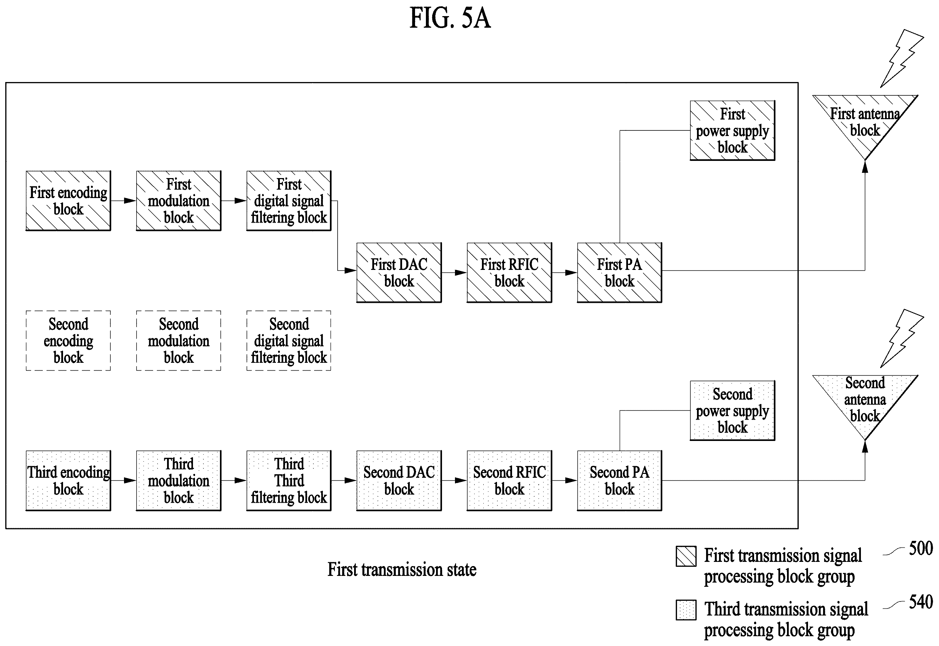

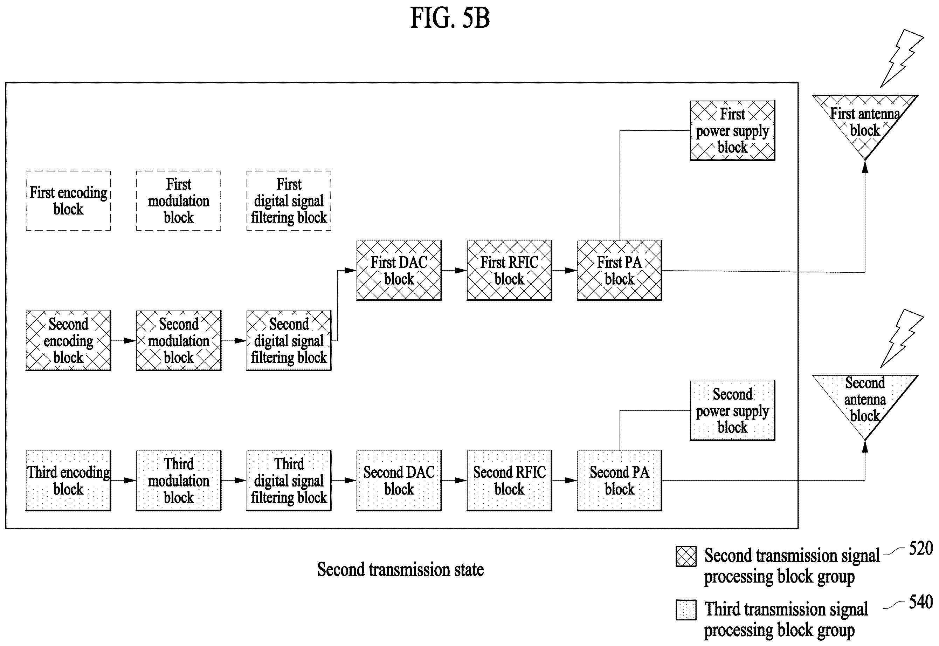

FIGS. 5A and 5B are diagrams for illustrating a process of Tx switching performed by the terminal 100, according to an example embodiment. The process of Tx switching depicted in FIGS. 5A and 5B may include and/or may be similar in many respects to the process of Tx switching described above with reference to FIG. 2, and may include additional features not mentioned above. Consequently, repeated descriptions of the process of Tx switching described above with reference to FIG. 2 may be omitted for the sake of brevity.

According to an example embodiment, the terminal 100 transmits a signal to the base station 200 through transmission signal processing blocks. For example, referring to FIG. 5A, the terminal 100 may transmit the signal to the base station 200 through a first transmission signal processing block group 500 including a first encoding block, a first modulation block, a first digital signal filtering block, a first DAC block, a first RFIC block, a first PA block, a first antenna block, and a first power supply block. Alternatively, the terminal 100 may transmit the signal to the base station 200 through a third transmission signal processing block group 540 including a third encoding block, a third modulation block, a third digital signal filtering block, a second DAC block, a second RFIC block, a second PA block, a second antenna block, and a second power supply block.

According to an example embodiment, the terminal 100 may identify a minimum switching time based on the number of blocks for each type among the transmission signal processing blocks and the time required to change a parameter of each block. For example, referring to FIG. 5A, the terminal 100 may identify that three (3) encoding blocks, three (3) modulation blocks, and three (3) digital signal filtering blocks may be present and two (2) DAC blocks, two (2) RFIC blocks, two (2) PA blocks, two (2) antenna blocks, and two (2) power supply blocks may be present. Accordingly, the terminal 100 may determine the longest time among times required to change parameters of the DAC block, the RFIC block, the PA block, the antenna block, and the power supply block to be the minimum switching time of the terminal 100.

According to an example embodiment, the terminal 100 may transmit information on the minimum switching time to the base station 200. For example, the terminal 100 may transmit information on a switching gap and/or information on the switching gap determined for each type of Tx switching to the base station 200.

According to an example embodiment, the terminal 100 receives transmission configuration information and scheduling information from the base station 200. For example, the base station 200 may transmit a control message and/or an RRC message including the transmission configuration information and control information and/or DCI including the scheduling information to the terminal 100.

According to an example embodiment, the terminal 100 may determine a second transmission signal processing block group 520 to transmit a signal subsequent to Tx switching. For example, it may be identified that parameters of the encoding block, the modulation block, the digital signal filtering block, the DAC block, the RFIC block, the PA block, the antenna block, and the power supply block may be changed based on the transmission configuration information received from the base station 200. Further, referring to FIG. 5A, the terminal 100 may identify that a second encoding block, a second modulation block, and a second digital signal filtering block from among the transmission signal processing blocks need not be used. Accordingly, the terminal 100 may determine to transmit the signal subsequent to Tx switching using the second encoding block, the second modulation block, and the second digital signal filtering block, which need not be used, and the first DAC block, the first RFIC block, the first PA block, the first antenna block, and the first power supply block.

According to an example embodiment, the terminal 100 activates at least one of a plurality of second transmission signal processing blocks included in the second transmission signal processing block group 520. For example, referring to FIGS. 5A and 5B, since the second encoding block, the second modulation block, and the second digital signal filtering block, which may be determined to be the second transmission signal processing block group 520, need not be used to transmit the signal, the terminal 100 may activate the second encoding block, the second modulation block, and the second digital signal filtering block.

According to an example embodiment, the terminal 100 may deactivate, in response to completion of the transmitting of the signal, at least one of a plurality of first transmission signal processing blocks included in the first transmission signal processing block group 500. For example, since the first encoding block, the first modulation block, and the first digital signal filtering block need not be included in the second transmission signal processing block group 520, the terminal 100 may deactivate the first encoding block, the first modulation block, and the first digital signal filtering block.

According to an example embodiment, the terminal 100 may change a parameter of at least one of the plurality of first transmission signal processing blocks based on the transmission configuration information. For example, the terminal 100 may change parameters of the first DAC block, the first RFIC block, the first PA block, the first antenna block, and the first power supply block based on the transmission configuration information received from the base station 200.

According to an example embodiment, the terminal 100 transmits the signal to the base station 200 through the second transmission signal processing block group 520. For example, referring to FIG. 5B, the terminal 100 may transmit the signal to the base station 200 using the second encoding block, the second modulation block, the second digital signal filtering block, the first DAC block, the first RFIC block, the first PA block, the first antenna block, and the first power supply block at a time point that is set based on the scheduling information received from the base station 200.

In an embodiment, the terminal 100 may set a state value corresponding to each transmission signal processing block group used to transmit a signal and perform Tx switching based on the set state value. For example, as illustrated in FIG. 5A, a state of transmitting a signal using the first transmission signal processing block group 500 and the third transmission signal processing block group 540 may be set as a first transmission state, and as illustrated in FIG. 5B, a state of transmitting a signal using the second transmission signal processing block group 520 and the third transmission signal processing block group 540 may be set as a second transmission state. Subsequently, the terminal 100 may perform Tx switching by retrieving a value of the second transmission state based on the configuration information received from the base station 200.

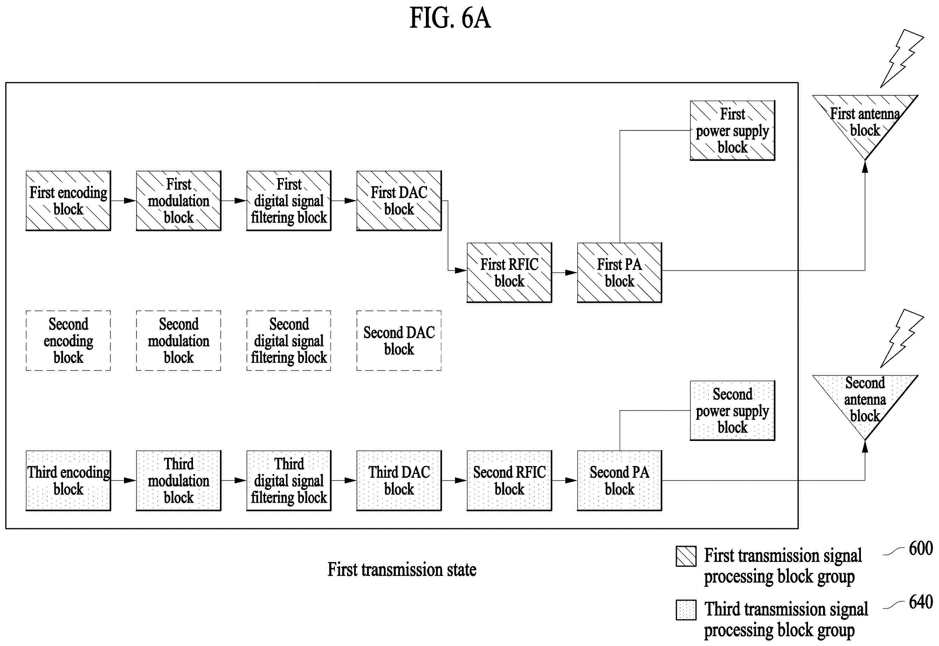

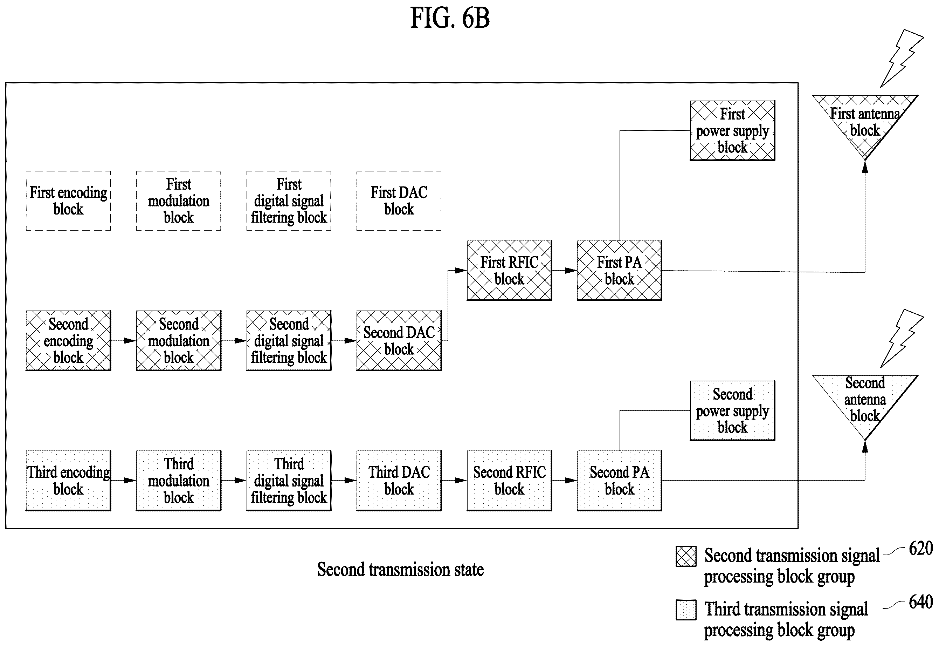

FIGS. 6A and 6B are diagrams for illustrating a process of Tx switching performed by the terminal 100, according to an example embodiment. A description overlapping with the above descriptions related to is omitted or briefly mentioned. The process of Tx switching depicted in FIGS. 6A and 6B may include and/or may be similar in many respects to the process of Tx switching described above with reference to FIG. 2, and may include additional features not mentioned above. Consequently, repeated descriptions of the process of Tx switching described above with reference to FIG. 2 may be omitted for the sake of brevity.

According to an example embodiment, the terminal 100 transmits a signal to the base station 200 through transmission signal processing blocks. For example, referring to FIG. 6A, the terminal 100 may transmit the signal to the base station 200 through a first transmission signal processing block group 600 including a first encoding block, a first modulation block, a first digital signal filtering block, a first DAC block, a first RFIC block, a first PA block, a first antenna block, and a first power supply block. Alternatively, the terminal 100 may transmit the signal to the base station 200 through a third transmission signal processing block group 640 including a third encoding block, a third modulation block, a third digital signal filtering block, a third DAC block, a second RFIC block, a second PA block, a second antenna block, and a second power supply block.

According to an example embodiment, the terminal 100 may identify a minimum switching time based on the number of blocks for each type among the transmission signal processing blocks and the time required to change a parameter of each block. For example, referring to FIG. 6A, the terminal 100 may identify that three (3) encoding blocks, three (3) modulation blocks, three (3) digital signal filtering blocks, and three (3) DAC blocks may be present and two (2) RFIC blocks, two (2) PA blocks, two (2) antenna blocks, and two (2) power supply blocks may be present. Accordingly, the terminal 100 may determine the longest time among times required to change parameters of the RFIC block, the PA block, the antenna block, and the power supply block to be the minimum switching time of the terminal 100.

According to an example embodiment, the terminal 100 may transmit information on the minimum switching time to the base station 200. For example, the terminal 100 may transmit information on a switching gap and/or information on the switching gap determined for each type of Tx switching to the base station 200.

According to an example embodiment, the terminal 100 receives transmission configuration information and scheduling information from the base station 200. For example, the base station 200 may transmit a control message and/or an RRC message including the transmission configuration information and control information and/or DCI including the scheduling information to the terminal 100.

According to an example embodiment, the terminal 100 may determine a second transmission signal processing block group 620 to transmit a signal subsequent to Tx switching. For example, it may be identified that parameters of the encoding block, the modulation block, the digital signal filtering block, the DAC block, the RFIC block, the PA block, the antenna block, and the power supply block may be changed based on the transmission configuration information received from the base station 200. Further, referring to FIG. 6A, the terminal 100 may identify that a second encoding block, a second modulation block, a second digital signal filtering block, and a second DAC block among the transmission signal processing blocks need not be used. Accordingly, the terminal 100 may determine to transmit the signal subsequent to Tx switching using the second encoding block, the second modulation block, the second digital signal filtering block, and the second DAC block, which need not be used, and the first RFIC block, the first PA block, the first antenna block, and the first power supply block.

According to an example embodiment, the terminal 100 activates at least one of a plurality of second transmission signal processing blocks included in the second transmission signal processing block group 620. For example, referring to FIGS. 6A and 6B, since the second encoding block, the second modulation block, the second digital signal filtering block, and the second DAC block, which may be determined to be the second transmission signal processing block group 620, may be not used to transmit the signal, the terminal 100 may activate the second encoding block, the second modulation block, the second digital signal filtering block, and the second DAC block.

According to an example embodiment, the terminal 100 may deactivate, in response to completion of the transmitting of the signal, at least one of a plurality of first transmission signal processing blocks included in the first transmission signal processing block group 600. For example, since the first encoding block, the first modulation block, the first digital signal filtering block, and the first DAC block need not be included in the second transmission signal processing block group 620, the terminal 100 may deactivate the first encoding block, the first modulation block, the first digital signal filtering block, and the first DAC block.

According to an example embodiment, the terminal 100 may change a parameter of at least one of the plurality of first transmission signal processing blocks based on the transmission configuration information. For example, the terminal 100 may change parameters of the first RFIC block, the first PA block, the first antenna block, and the first power supply block based on the transmission configuration information received from the base station 200.

According to an example embodiment, the terminal 100 transmits the signal to the base station 200 through the second transmission signal processing block group 620. For example, referring to FIG. 6B, the terminal 100 may transmit the signal to the base station 200 using the second encoding block, the second modulation block, the second digital signal filtering block, the second DAC block, the first RFIC block, the first PA block, the first antenna block, and the first power supply block at a time point that is set based on the scheduling information received from the base station 200.

In an embodiment, the terminal 100 may set a state value corresponding to each transmission signal processing block group used to transmit a signal and perform Tx switching based on the set state value. For example, as illustrated in FIG. 6A, a state of transmitting a signal using the first transmission signal processing block group 600 and the third transmission signal processing block group 640 may be set as a first transmission state, and as illustrated in FIG. 6B, a state of transmitting a signal using the second transmission signal processing block group 620 and the third transmission signal processing block group 640 may be set as a second transmission state. Subsequently, the terminal 100 may perform Tx switching by retrieving a value of the second transmission state based on the configuration information received from the base station 200.

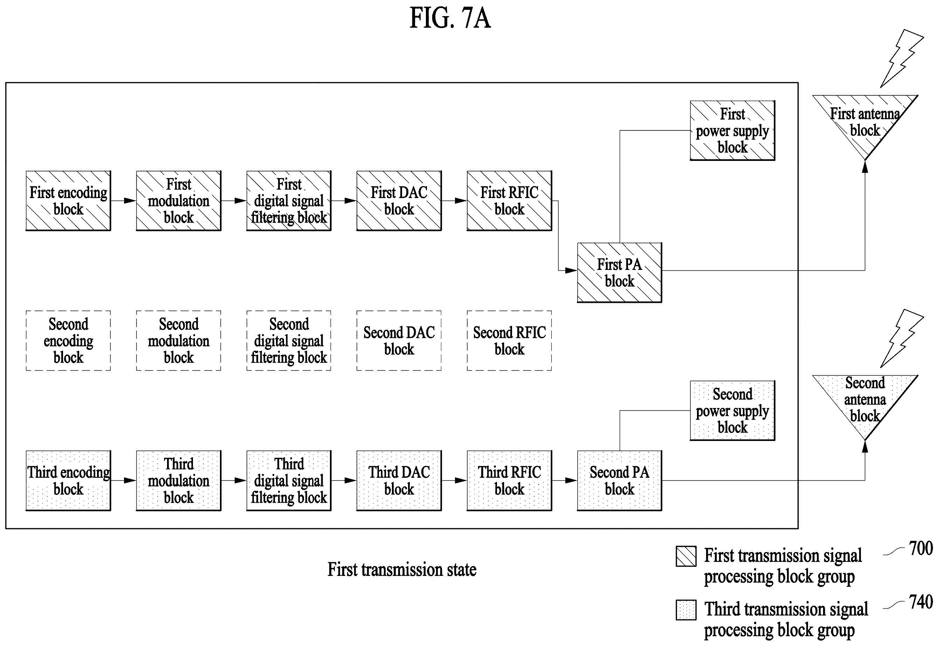

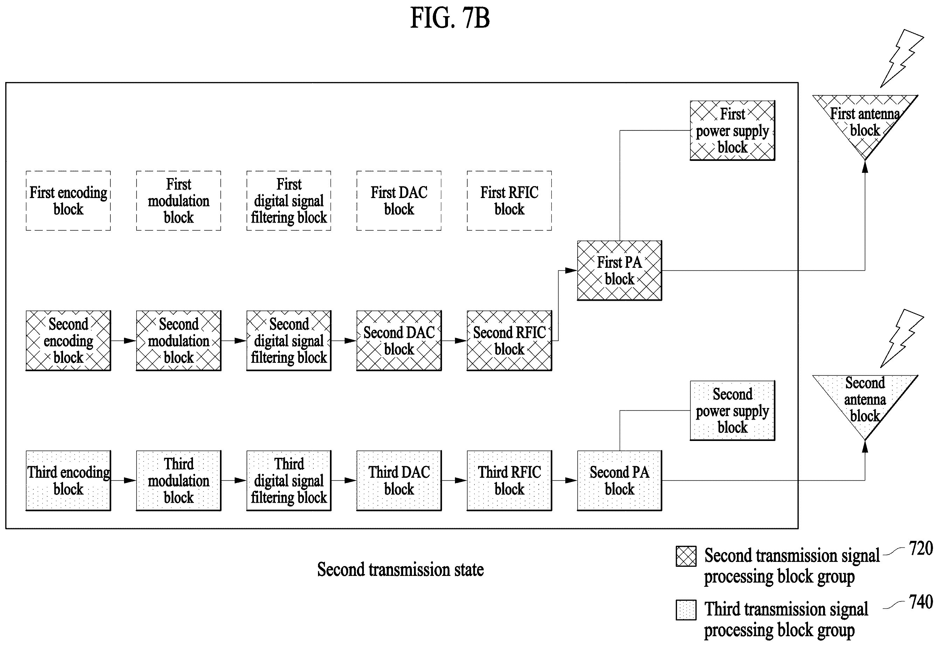

FIGS. 7A and 7B are diagrams for illustrating a process of Tx switching performed by the terminal 100, according to an example embodiment. The process of Tx switching depicted in FIGS. 7A and 7B may include and/or may be similar in many respects to the process of Tx switching described above with reference to FIG. 2, and may include additional features not mentioned above. Consequently, repeated descriptions of the process of Tx switching described above with reference to FIG. 2 may be omitted for the sake of brevity.

According to an example embodiment, the terminal 100 transmits a signal to the base station 200 through transmission signal processing blocks. For example, referring to FIG. 7A, the terminal 100 may transmit the signal to the base station 200 through a first transmission signal processing block group 700 including a first encoding block, a first modulation block, a first digital signal filtering block, a first DAC block, a first RFIC block, a first PA block, a first antenna block, and a first power supply block. Alternatively, the terminal 100 may transmit the signal to the base station 200 through a third transmission signal processing block group 740 including a third encoding block, a third modulation block, a third digital signal filtering block, a third DAC block, a third RFIC block, a second PA block, a second antenna block, and a second power supply block.

According to an example embodiment, the terminal 100 may identify a minimum switching time based on the number of blocks for each type among the transmission signal processing blocks and the time required to change a parameter of each block. For example, referring to FIG. 7A, the terminal 100 may identify that three (3) encoding blocks, three (3) modulation blocks, three (3) digital signal filtering blocks, three (3) DAC blocks, and three (3) RFIC blocks may be present and two (2) PA blocks, two (2) antenna blocks, and two (2) power supply blocks may be present. Accordingly, the terminal 100 may determine the longest time among times required to change parameters of the PA block, the antenna block, and the power supply block to be the minimum switching time of the terminal 100.

According to an example embodiment, the terminal 100 may transmit information on the minimum switching time to the base station 200. For example, the terminal 100 may transmit information on a switching gap and/or information on the switching gap determined for each type of Tx switching to the base station 200.

According to an example embodiment, the terminal 100 receives transmission configuration information and scheduling information from the base station 200. For example, the base station 200 may transmit a control message and/or an RRC message including the transmission configuration information and control information and/or DCI including the scheduling information to the terminal 100.

According to an example embodiment, the terminal 100 may determine a second transmission signal processing block group 720 to transmit a signal subsequent to Tx switching. For example, it may be identified that parameters of the encoding block, the modulation block, the digital signal filtering block, the DAC block, the RFIC block, the PA block, the antenna block, and the power supply block may be changed based on the transmission configuration information received from the base station 200. Further, referring to FIG. 7A, the terminal 100 may identify that a second encoding block, a second modulation block, a second digital signal filtering block, a second DAC block, and a second RFIC block among the transmission signal processing blocks need not be used. Accordingly, the terminal 100 may determine to transmit the signal subsequent to Tx switching using the second encoding block, the second modulation block, the second digital signal filtering block, the second DAC block, and the second RFIC block, which need not be used, and the first PA block, the first antenna block, and the first power supply block.

According to an example embodiment, the terminal 100 activates at least one of a plurality of second transmission signal processing blocks included in the second transmission signal processing block group 720. For example, referring to FIGS. 7A and 7B, since the second encoding block, the second modulation block, the second digital signal filtering block, the second DAC block, and the second RFIC block, which may be determined to be the second transmission signal processing block group 720, need not be used to transmit the signal, the terminal 100 may activate the second encoding block, the second modulation block, the second digital signal filtering block, the second DAC block, and the second RFIC block.

According to an example embodiment, the terminal 100 may deactivate, in response to completion of the transmitting of the signal, at least one of a plurality of first transmission signal processing blocks included in the first transmission signal processing block group 700. For example, since the first encoding block, the first modulation block, the first digital signal filtering block, the first DAC block, and the first RFIC block need not be included in the second transmission signal processing block group 720, the terminal 100 may deactivate the first encoding block, the first modulation block, the first digital signal filtering block, the first DAC block, and the first RFIC block.

According to an example embodiment, the terminal 100 may change a parameter of at least one of the plurality of first transmission signal processing blocks based on the transmission configuration information. For example, the terminal 100 may change parameters of the first PA block, the first antenna block, and the first power supply block based on the transmission configuration information received from the base station 200.

According to an example embodiment, the terminal 100 transmits the signal to the base station 200 through the second transmission signal processing block group 720. For example, referring to FIG. 7B, the terminal 100 may transmit the signal to the base station 200 using the second encoding block, the second modulation block, the second digital signal filtering block, the second DAC block, the second RFIC block, the first PA block, the first antenna block, and the first power supply block at a time point that is set based on the scheduling information received from the base station 200.

In an embodiment, the terminal 100 may set a state value corresponding to each transmission signal processing block group used to transmit a signal and perform Tx switching based on the set state value. For example, as illustrated in FIG. 7A, a state of transmitting a signal using the first transmission signal processing block group 700 and the third transmission signal processing block group 740 may be set as a first transmission state, and as illustrated in FIG. 7B, a state of transmitting a signal using the second transmission signal processing block group 720 and the third transmission signal processing block group 740 may be set as a second transmission state. Subsequently, the terminal 100 may perform Tx switching by retrieving a value of the second transmission state based on the configuration information received from the base station 200.

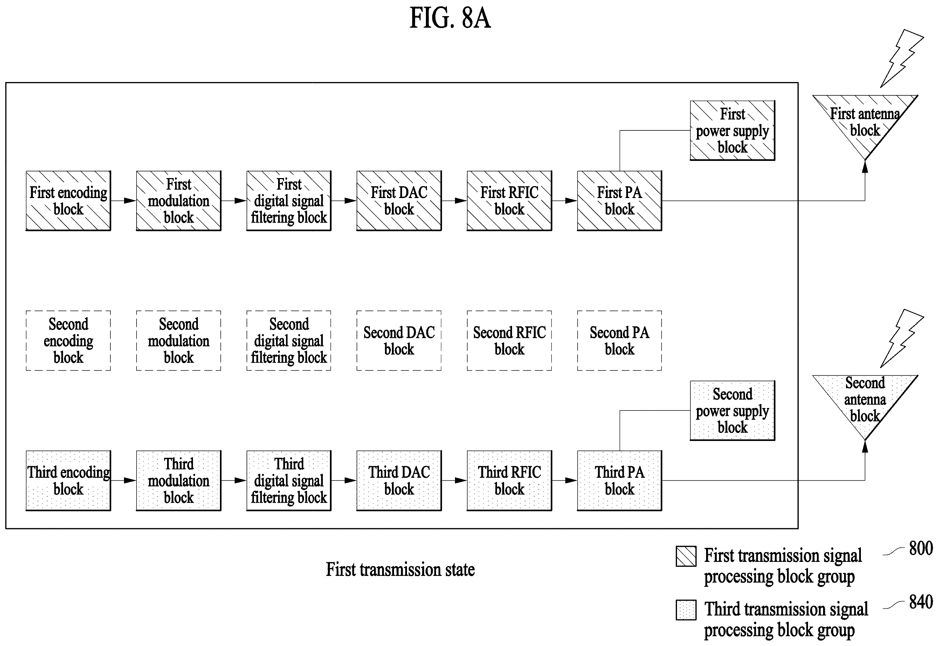

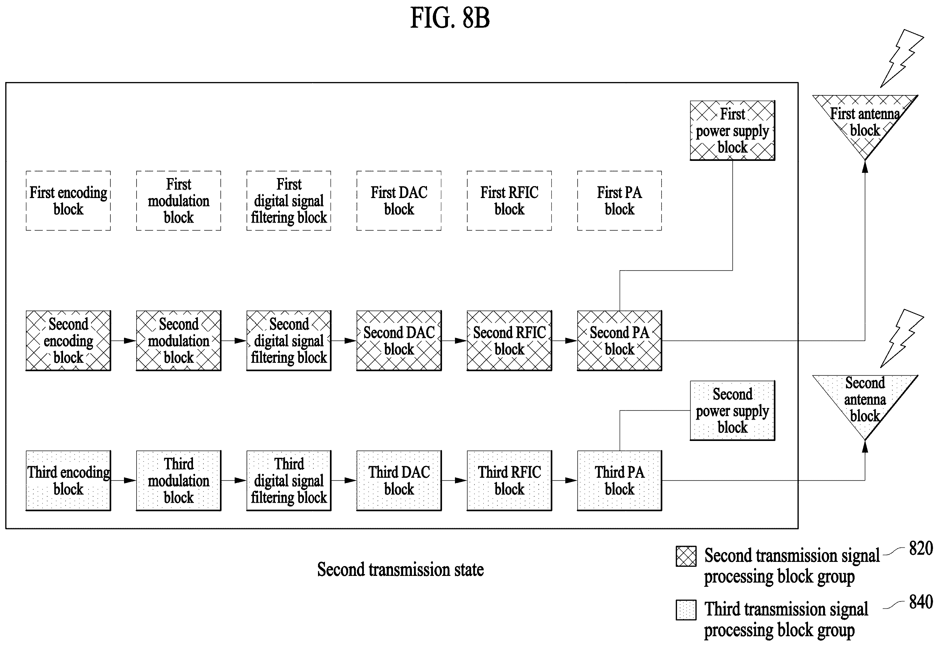

FIGS. 8A and 8B are diagrams for illustrating a process of Tx switching performed by the terminal 100, according to an example embodiment. The process of Tx switching depicted in FIGS. 8A and 8B may include and/or may be similar in many respects to the process of Tx switching described above with reference to FIG. 2, and may include additional features not mentioned above. Consequently, repeated descriptions of the process of Tx switching described above with reference to FIG. 2 may be omitted for the sake of brevity.

According to an example embodiment, the terminal 100 transmits a signal to the base station 200 through transmission signal processing blocks. For example, referring to FIG. 8A, the terminal 100 may transmit the signal to the base station 200 through a first transmission signal processing block group 800 including a first encoding block, a first modulation block, a first digital signal filtering block, a first DAC block, a first RFIC block, a first PA block, a first antenna block, and a first power supply block. Alternatively, the terminal 100 may transmit the signal to the base station 200 through a third transmission signal processing block group 840 including a third encoding block, a third modulation block, a third digital signal filtering block, a third DAC block, a third RFIC block, a third PA block, a second antenna block, and a second power supply block.

According to an example embodiment, the terminal 100 may identify a minimum switching time based on the number of blocks for each type among the transmission signal processing blocks and the time required to change a parameter of each block. For example, referring to FIG. 8A, the terminal 100 may identify that three (3) encoding blocks, three (3) modulation blocks, three (3) digital signal filtering blocks, three (3) DAC blocks, three (3) RFIC blocks, and three (3) PA blocks may be present and two (2) antenna blocks and two (2) power supply blocks may be present. Accordingly, the terminal 100 may determine the longest time among times required to change parameters of the antenna block and the power supply block to be the minimum switching time of the terminal 100.

According to an example embodiment, the terminal 100 may transmit information on the minimum switching time to the base station 200. For example, the terminal 100 may transmit information on a switching gap and/or information on the switching gap determined for each type of Tx switching to the base station 200.

According to an example embodiment, the terminal 100 receives transmission configuration information and scheduling information from the base station 200. For example, the base station 200 may transmit a control message and/or an RRC message including the transmission configuration information and control information and/or DCI including the scheduling information to the terminal 100.

According to an example embodiment, the terminal 100 may determine a second transmission signal processing block group 820 to transmit a signal subsequent to Tx switching. For example, it may be identified that parameters of the encoding block, the modulation block, the digital signal filtering block, the DAC block, the RFIC block, the PA block, the antenna block, and the power supply block may be changed based on the transmission configuration information received from the base station 200. Further, referring to FIG. 8A, the terminal 100 may identify that a second encoding block, a second modulation block, a second digital signal filtering block, a second DAC block, a second RFIC block, and a second PA block among the transmission signal processing blocks need not be used. Accordingly, the terminal 100 may determine to transmit the signal subsequent to Tx switching using the second encoding block, the second modulation block, the second digital signal filtering block, the second DAC block, the second RFIC block, and the second PA block, which need not be used, and the first antenna block and the first power supply block.

According to an example embodiment, the terminal 100 activates at least one of a plurality of second transmission signal processing blocks included in the second transmission signal processing block group 820. For example, referring to FIGS. 8A and 8B, since the second encoding block, the second modulation block, the second digital signal filtering block, the second DAC block, the second RFIC block, and the second PA block, which may be determined to be the second transmission signal processing block group 820, need not be used to transmit the signal, the terminal 100 may activate the second encoding block, the second modulation block, the second digital signal filtering block, the second DAC block, the second RFIC block, and the second PA block.

According to an example embodiment, the terminal 100 may deactivate, in response to completion of the transmitting of the signal, at least one of a plurality of first transmission signal processing blocks included in the first transmission signal processing block group 800. For example, since the first encoding block, the first modulation block, the first digital signal filtering block, the first DAC block, the first RFIC block, and the first PA block need not be included in the second transmission signal processing block group 820, the terminal 100 may deactivate the first encoding block, the first modulation block, the first digital signal filtering block, the first DAC block, the first RFIC block, and the first PA block.

According to an example embodiment, the terminal 100 may change a parameter of at least one of the plurality of first transmission signal processing blocks based on the transmission configuration information. For example, the terminal 100 may change parameters of the first antenna block and the first power supply block based on the transmission configuration information received from the base station 200.

According to an example embodiment, the terminal 100 transmits the signal to the base station 200 through the second transmission signal processing block group 820. For example, referring to FIG. 8B, the terminal 100 may transmit the signal to the base station 200 using the second encoding block, the second modulation block, the second digital signal filtering block, the second DAC block, the second RFIC block, the second PA block, the first antenna block, and the first power supply block at a time point that is set based on the scheduling information received from the base station 200.

In an embodiment, the terminal 100 may set a state value corresponding to each transmission signal processing block group used to transmit a signal and perform Tx switching based on the set state value. For example, as illustrated in FIG. 8A, a state of transmitting a signal using the first transmission signal processing block group 800 and the third transmission signal processing block group 840 may be set as a first transmission state, and as illustrated in FIG. 8B, a state of transmitting a signal using the second transmission signal processing block group 820 and the third transmission signal processing block group 840 may be set as a second transmission state. Subsequently, the terminal 100 may perform Tx switching by retrieving a value of the second transmission state based on the configuration information received from the base station 200.

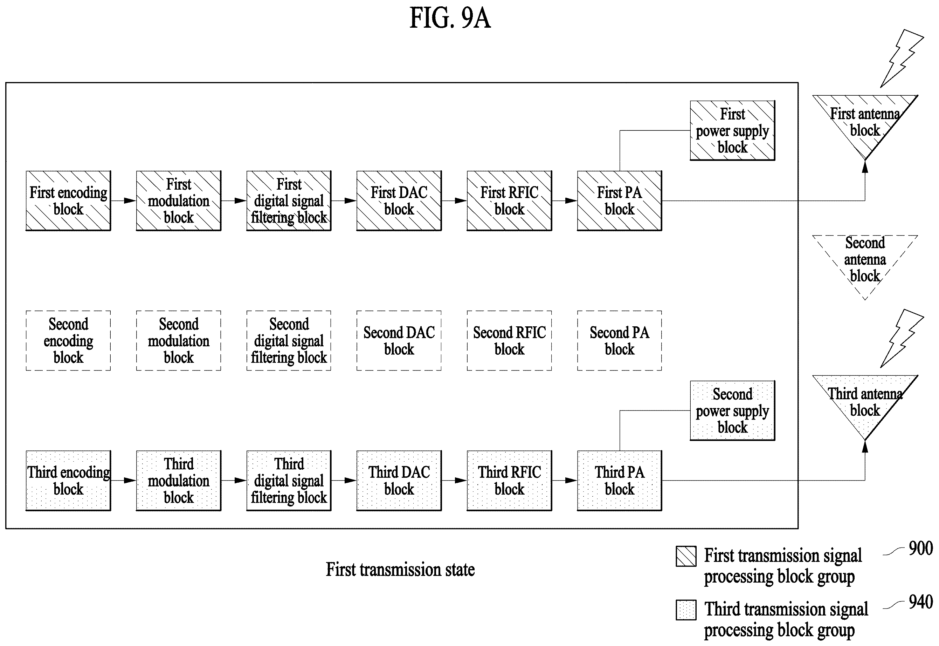

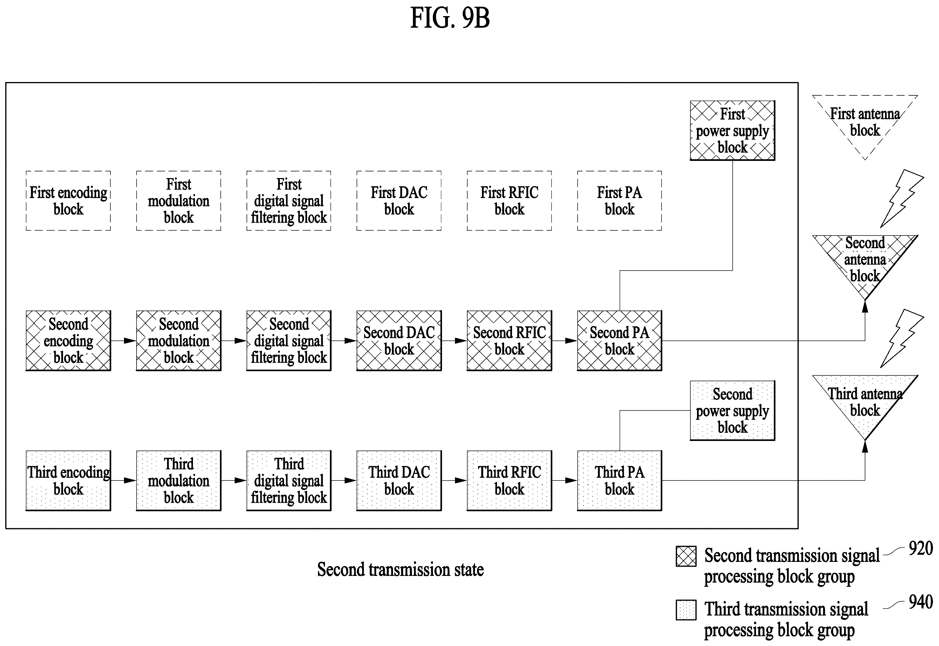

FIGS. 9A and 9B are diagrams for illustrating a process of Tx switching performed by the terminal 100, according to an example embodiment. The process of Tx switching depicted in FIGS. 9A and 9B may include and/or may be similar in many respects to the process of Tx switching described above with reference to FIG. 2, and may include additional features not mentioned above. Consequently, repeated descriptions of the process of Tx switching described above with reference to FIG. 2 may be omitted for the sake of brevity.

According to an example embodiment, the terminal 100 transmits a signal to the base station 200 through transmission signal processing blocks. For example, referring to FIG. 9A, the terminal 100 may transmit the signal to the base station 200 through a first transmission signal processing block group 900 including a first encoding block, a first modulation block, a first digital signal filtering block, a first DAC block, a first RFIC block, a first PA block, a first antenna block, and a first power supply block. Alternatively, the terminal 100 may transmit the signal to the base station 200 through a third transmission signal processing block group 940 including a third encoding block, a third modulation block, a third digital signal filtering block, a third DAC block, a third RFIC block, a third PA block, a third antenna block, and a second power supply block.

According to an example embodiment, the terminal 100 may identify a minimum switching time based on the number of blocks for each type among the transmission signal processing blocks and the time required to change a parameter of each block. For example, referring to FIG. 9A, the terminal 100 may identify that three (3) encoding blocks, three (3) modulation blocks, three (3) digital signal filtering blocks, three (3) DAC blocks, three (3) RFIC blocks, three (3) PA blocks, and three (3) antenna blocks may be present and two (2) power supply blocks may be present. Accordingly, the terminal 100 may determine the time required to change a parameter of the power supply block to be the minimum switching time of the terminal 100.

According to an example embodiment, the terminal 100 may transmit information on the minimum switching time to the base station 200. For example, the terminal 100 may transmit information on a switching gap and/or information on the switching gap determined for each type of Tx switching to the base station 200.

According to an example embodiment, the terminal 100 receives transmission configuration information and scheduling information from the base station 200. For example, the base station 200 may transmit a control message and/or an RRC message including the transmission configuration information and control information and/or DCI including the scheduling information to the terminal 100.

According to an example embodiment, the terminal 100 may determine a second transmission signal processing block group 920 to transmit a signal subsequent to Tx switching. For example, it may be identified that parameters of the encoding block, the modulation block, the digital signal filtering block, the DAC block, the RFIC block, the PA block, the antenna block, and the power supply block may be changed based on the transmission configuration information received from the base station 200. Further, referring to FIG. 9A, the terminal 100 may identify that a second encoding block, a second modulation block, a second digital signal filtering block, a second DAC block, a second RFIC block, a second PA block, and a second antenna block among the transmission signal processing blocks need not be used. Accordingly, the terminal 100 may determine to transmit the signal subsequent to Tx switching using the second encoding block, the second modulation block, the second digital signal filtering block, the second DAC block, the second RFIC block, the second PA block, and the second antenna block, which need not be used, and the first power supply block.

According to an example embodiment, the terminal 100 activates at least one of a plurality of second transmission signal processing blocks included in the second transmission signal processing block group 920. For example, referring to FIGS. 9A and 9B, since the second encoding block, the second modulation block, the second digital signal filtering block, the second DAC block, the second RFIC block, the second PA block, and the second antenna block, which may be determined to be the second transmission signal processing block group 920, need not be used to transmit the signal, the terminal 100 may activate the second encoding block, the second modulation block, the second digital signal filtering block, the second DAC block, the second RFIC block, the second PA block, and the second antenna block.

According to an example embodiment, the terminal 100 may deactivate, in response to completion of the transmitting of the signal, at least one of a plurality of first transmission signal processing blocks included in the first transmission signal processing block group 900. For example, since the first encoding block, the first modulation block, the first digital signal filtering block, the first DAC block, the first RFIC block, the first PA block, and the first antenna block need not be included in the second transmission signal processing block group 920, the terminal 100 may deactivate the first encoding block, the first modulation block, the first digital signal filtering block, the first DAC block, the first RFIC block, the first PA block, and the first antenna block.

According to an example embodiment, the terminal 100 may change a parameter of at least one of the plurality of first transmission signal processing blocks based on the transmission configuration information. For example, the terminal 100 may change a parameter of the first power supply block based on the transmission configuration information received from the base station 200.

According to an example embodiment, the terminal 100 transmits the signal to the base station 200 through the second transmission signal processing block group 920. For example, referring to FIG. 9B, the terminal 100 may transmit the signal to the base station 200 using the second encoding block, the second modulation block, the second digital signal filtering block, the second DAC block, the second RFIC block, the second PA block, the second antenna block, and the first power supply block at a time point that is set based on the scheduling information received from the base station 200.

In an embodiment, the terminal 100 may set a state value corresponding to each transmission signal processing block group used to transmit a signal and perform Tx switching based on the set state value. For example, as illustrated in FIG. 9A, a state of transmitting a signal using the first transmission signal processing block group 900 and the third transmission signal processing block group 940 may be set as a first transmission state, and as illustrated in FIG. 9B, a state of transmitting a signal using the second transmission signal processing block group 920 and the third transmission signal processing block group 940 may be set as a second transmission state. Subsequently, the terminal 100 may perform Tx switching by retrieving a value of the second transmission state based on the configuration information received from the base station 200.

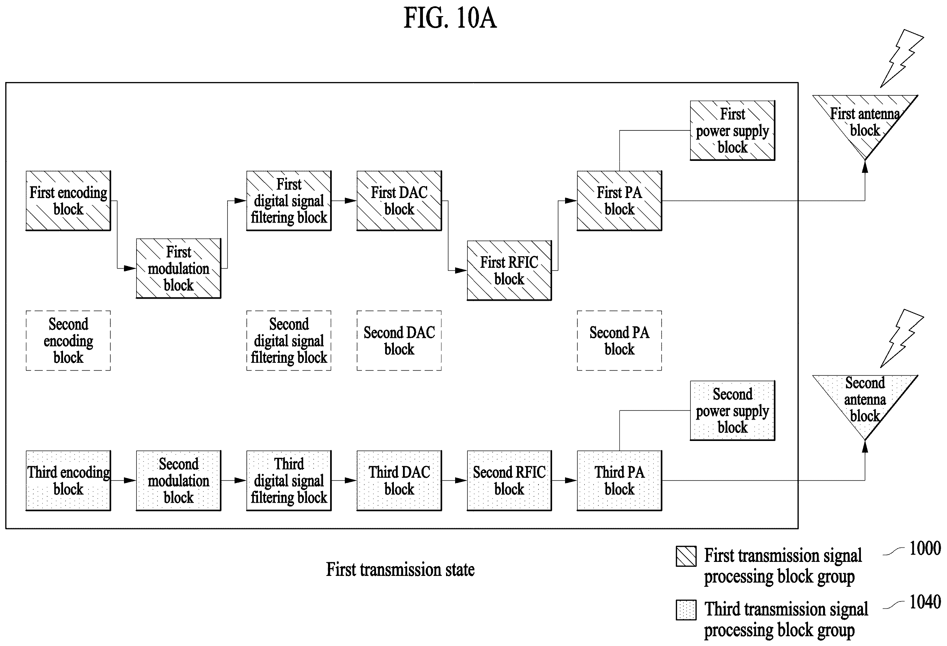

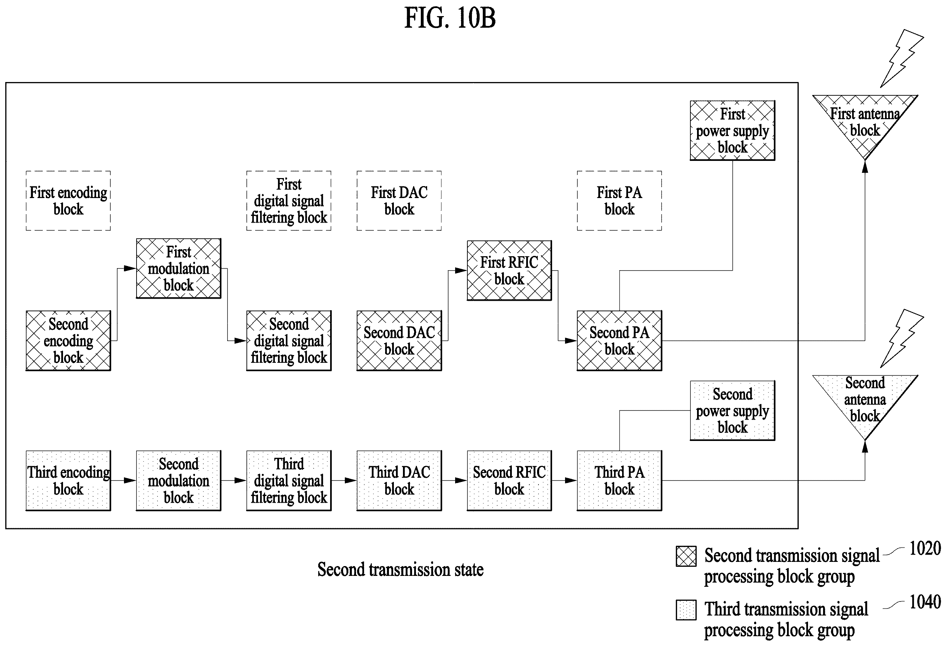

FIGS. 10A and 10B are diagrams for illustrating a process of Tx switching performed by the terminal 100, according to an example embodiment. The process of Tx switching depicted in FIGS. 10A and 10B may include and/or may be similar in many respects to the process of Tx switching described above with reference to FIG. 2, and may include additional features not mentioned above. Consequently, repeated descriptions of the process of Tx switching described above with reference to FIG. 2 may be omitted for the sake of brevity.

According to an example embodiment, the terminal 100 transmits a signal to the base station 200 through transmission signal processing blocks. For example, referring to FIG. 10A, the terminal 100 may transmit the signal to the base station 200 through a first transmission signal processing block group 1000 including a first encoding block, a first modulation block, a first digital signal filtering block, a first DAC block, a first RFIC block, a first PA block, a first antenna block, and a first power supply block. Alternatively, the terminal 100 may transmit the signal to the base station 200 through a third transmission signal processing block group 1040 including a third encoding block, a second modulation block, a third digital signal filtering block, a third DAC block, a second RFIC block, a third PA block, a second antenna block, and a second power supply block.

According to an example embodiment, the terminal 100 may identify a minimum switching time based on the number of blocks for each type among the transmission signal processing blocks and the time required to change a parameter of each block. For example, referring to FIG. 10A, the terminal 100 may identify that three (3) encoding blocks, three (3) digital signal filtering blocks, three (3) DAC blocks, and three (3) PA blocks may be present and two (2) modulation blocks, two (2) RFIC blocks, two (2) power supply blocks, and two (2) antenna blocks may be present. Accordingly, the terminal 100 may determine the longest time among times required to change parameters of the modulation block, the RFIC block, the power supply block, and the antenna block to be the minimum switching time of the terminal 100.

According to an example embodiment, the terminal 100 may transmit information on the minimum switching time to the base station 200. For example, the terminal 100 may transmit information on a switching gap and/or information on the switching gap determined for each type of Tx switching to the base station 200.

According to an example embodiment, the terminal 100 receives transmission configuration information and scheduling information from the base station 200. For example, the base station 200 may transmit a control message and/or an RRC message including the transmission configuration information and control information and/or DCI including the scheduling information to the terminal 100.

According to an example embodiment, the terminal 100 may determine a second transmission signal processing block group 1020 to transmit a signal subsequent to Tx switching. For example, it may be identified that parameters of the encoding block, the modulation block, the digital signal filtering block, the DAC block, the RFIC block, the PA block, the antenna block, and the power supply block may be changed based on the transmission configuration information received from the base station 200. Further, referring to FIG. 10A, the terminal 100 may identify that a second encoding block, a second digital signal filtering block, a second DAC block, and a second PA block among the transmission signal processing blocks need not be used. Accordingly, the terminal 100 may determine to transmit the signal subsequent to Tx switching using the second encoding block, the second digital signal filtering block, the second DAC block, and the second PA block, which need not be used, and the first modulation block, the first RFIC block, the first antenna block, and the first power supply block.

According to an example embodiment, the terminal 100 activates at least one of a plurality of second transmission signal processing blocks included in the second transmission signal processing block group 1020. For example, referring to FIGS. 10A and 10B, since the second encoding block, the second digital signal filtering block, the second DAC block, and the second PA block, which may be determined to be the second transmission signal processing block group 1020, need not be used to transmit the signal, the terminal 100 may activate the second encoding block, the second digital signal filtering block, the second DAC block, and the second PA block.

According to an example embodiment, the terminal 100 may deactivate, in response to completion of the transmitting of the signal, at least one of a plurality of first transmission signal processing blocks included in the first transmission signal processing block group 1000. For example, since the first encoding block, the first digital signal filtering block, the first DAC block, and the first PA block need not be included in the second transmission signal processing block group 1020, the terminal 100 may deactivate the first encoding block, the first digital signal filtering block, the first DAC block, and the first PA block.

According to an example embodiment, the terminal 100 may change a parameter of at least one of the plurality of first transmission signal processing blocks based on the transmission configuration information. For example, the terminal 100 may change parameters of the first modulation block, the first RFIC block, the first antenna block, and the first power supply block based on the transmission configuration information received from the base station 200.

According to an example embodiment, the terminal 100 transmits the signal to the base station 200 through the second transmission signal processing block group 1020. For example, referring to FIG. 10B, the terminal 100 may transmit the signal to the base station 200 using the second encoding block, the first modulation block, the second digital signal filtering block, the second DAC block, the first RFIC block, the second PA block, the first antenna block, and the first power supply block at a time point that is set based on the scheduling information received from the base station 200.

In an embodiment, the terminal 100 may set a state value corresponding to each transmission signal processing block group used to transmit a signal and perform Tx switching based on the set state value. For example, as illustrated in FIG. 10A, a state of transmitting a signal using the first transmission signal processing block group 1000 and the third transmission signal processing block group 1040 may be set as a first transmission state, and as illustrated in FIG. 10B, a state of transmitting a signal using the second transmission signal processing block group 1020 and the third transmission signal processing block group 1040 may be set as a second transmission state. Subsequently, the terminal 100 may perform Tx switching by retrieving a value of the second transmission state based on the configuration information received from the base station 200.

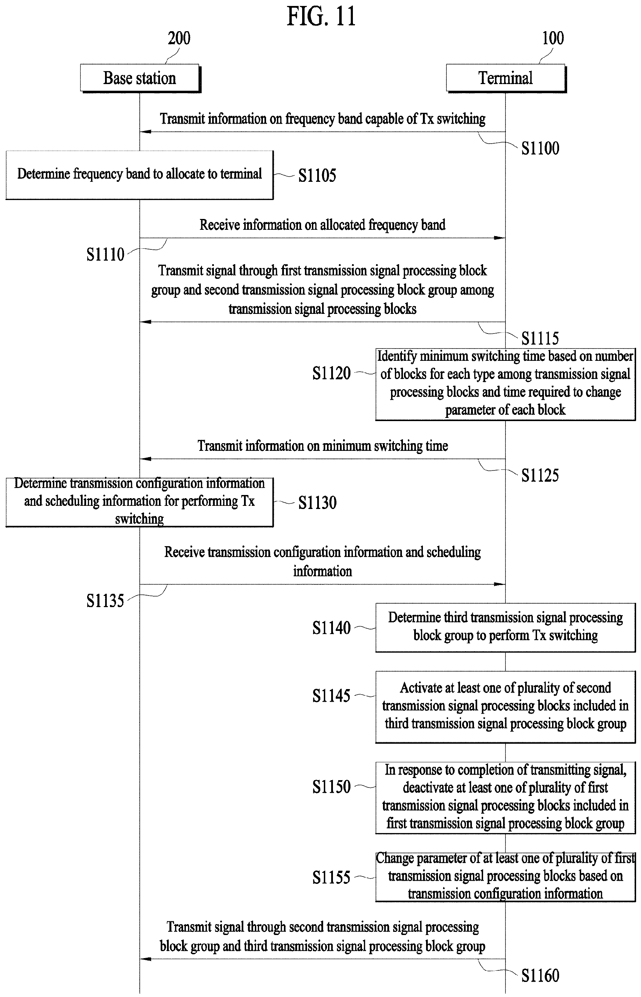

FIG. 11 is a diagram for illustrating a process of Tx switching performed by the terminal 100, according to an example embodiment. The process of Tx switching depicted in FIG. 11 may include and/or may be similar in many respects to the process of Tx switching described above with reference to FIG. 2, and may include additional features not mentioned above. Consequently, repeated descriptions of the process of Tx switching described above with reference to FIG. 2 may be omitted for the sake of brevity.

In operation S1100, according to an example embodiment, the terminal 100 may transmit information on a frequency band capable of Tx switching to the base station 200. For example, after being connected to a cell of the base station 200, the terminal 100 may transmit a UE capability information message including information on a combination of frequency bands capable of Tx switching supported by the terminal 100 to the base station 200.

In operation S1105, according to an example embodiment, the base station 200 may determine a frequency band to allocate to the terminal 100. For example, based on the information on the frequency band capable of Tx switching received from the terminal 100, the base station 200 may determine that the terminal 100 transmits a signal in an FDD manner in a first frequency band and transmits a signal in a TDD manner in a second frequency band. In such an embodiment, the second frequency band may be set to be wider than the first frequency band but is not limited thereto.

In operation S1110, according to an example embodiment, the terminal 100 may receive information on the allocated frequency band from the base station 200. For example, the base station 200 may transmit an RRC message including information on the first frequency band, information on the second frequency band, and information on a transmission manner to the terminal 100.

In operation S1115, according to an example embodiment, the terminal 100 transmits a signal through a first transmission signal processing block group and a second transmission signal processing block group among transmission signal processing blocks. For example, the terminal 100 may transmit a ULS in the FDD manner in the first frequency band through the first transmission signal processing block group including a first encoding block, a first modulation block, a first digital signal filtering block, a first DAC block, a first RFIC block, a first PA block, a first antenna block, and a first power supply block. Furthermore, the terminal 100 may transmit a ULS in the TDD manner in the second frequency band through the second transmission signal processing block group including a second encoding block, a second modulation block, a second digital signal filtering block, a second DAC block, a second RFIC block, a second PA block, a second antenna block, and a second power supply block.

In operation S1120, according to an example embodiment, the terminal 100 may identify a minimum switching time based on the number of blocks for each type among the transmission signal processing blocks and the time required to change a parameter of each block. For example, the terminal 100 may identify a type with the fewest (e.g., minimum) number among an encoding block, a modulation block, a digital signal filtering block, a DAC block, an RFIC block, a PA block, an antenna block, and a power supply block included in the transmission signal processing blocks and determine the longest time among times required to change a parameter of each of transmission signal processing blocks of the identified type to be the minimum switching time of the terminal 100 or a switching gap.

In operation S1125, according to an example embodiment, the terminal 100 may transmit information on the minimum switching time to the base station 200. For example, the terminal 100 may transmit information on the switching gap and/or information on the switching gap determined for each type of Tx switching to the base station 200.

In operation S1130, according to an example embodiment, the base station 200 may determine transmission configuration information and scheduling information for performing Tx switching. For example, the base station 200 may determine parameters related to multiple input multiple output (MIMO) and the scheduling information, so that the terminal 100 transmits the ULS through 2-layer MIMO in the second frequency band, instead of transmitting the signal in the FDD manner in the first frequency band, at a time point of transmitting the ULS in the TDD manner in the second frequency band.

In operation S1135, according to an example embodiment, the terminal 100 may receive the transmission configuration information and the scheduling information from the base station 200. The base station 200 may transmit a control message and/or an RRC message including the parameters related to MIMO and control information and/or DCI including the scheduling information to the terminal 100.

In operation S1140, according to an example embodiment, the terminal 100 may determine a third transmission signal processing block group to perform Tx switching. For example, the terminal 100 may determine, based on the parameters related to MIMO received from the base station 200 and the number of blocks for each type among the transmission signal processing blocks, a plurality of second transmission signal processing blocks for transmitting a ULS in the second frequency band after Tx switching. In such an embodiment, the plurality of second transmission signal processing blocks may include at least one of the first encoding block, the first modulation block, the first digital signal filtering block, the first DAC block, the first RFIC block, the first PA block, the first antenna block, and the first power supply block.

In operation S1145, according to an example embodiment, the terminal 100 activates at least one of the plurality of second transmission signal processing blocks included in the third transmission signal processing block group. For example, the terminal 100 may activate a transmission signal processing block that is not used to transmit the ULS in the FDD manner in the first frequency band among transmission signal processing blocks determined to be the second transmission signal processing block group.

In operation S1150, according to an example embodiment, the terminal 100 may deactivate, in response to completion of the transmitting of the signal, at least one of a plurality of first transmission signal processing blocks included in the first transmission signal processing block group. For example, in response to completion of the transmitting of the ULS in the first frequency band, the terminal 100 may deactivate a transmission signal processing block not included in the third transmission signal processing block group among the plurality of first transmission signal processing blocks.

In operation S1155, according to an example embodiment, the terminal 100 may change a parameter of at least one of the plurality of first transmission signal processing blocks based on the transmission configuration information. For example, the terminal 100 may identify a transmission signal processing block that is not deactivated among the plurality of first transmission signal processing blocks and change a parameter of the identified transmission signal processing block based on the parameters related to MIMO.

In operation S1160, according to an example embodiment, the terminal 100 transmits a signal through the second transmission signal processing block group and the third transmission signal processing block group. For example, the terminal 100 may transmit a ULS through 2-layer MIMO in the second frequency band through the second transmission signal processing block group and the third transmission signal processing block group.

While FIG. 11 illustrates that operation S1120 through operation S1135 may be performed after operation S1115 is performed, this is merely an example embodiment, and a performing sequence may be different therefrom. For example, the terminal 100 may perform operation S1115 after performing operations S1120 through S1135 or perform operation S1115 between operation S1120 and operation S1135.

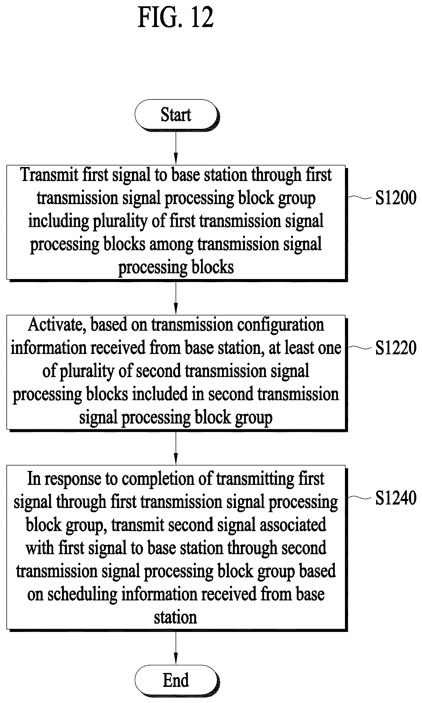

FIG. 12 shows a flowchart of an operation method of a terminal, according to an example embodiment. The aforementioned descriptions may be applied to overlapping content.

In operation S1200, the terminal may transmit a first signal to a base station through a first transmission signal processing block group including a plurality of first transmission signal processing blocks among transmission signal processing blocks.

According to an example embodiment, the plurality of first transmission signal processing blocks may include a first encoding block, a first modulation block, a first digital signal filtering block, a first DAC block, a first RFIC block, a first PA block, a first antenna block, and a first power supply block.

According to an example embodiment, the terminal may, based on information on a number of encoding blocks, a number of modulation blocks, a number of digital signal filtering blocks, a number of DAC blocks, a number of RFIC blocks, a number of PA blocks, a number of antenna blocks, and a number of power supply blocks among the transmission signal processing blocks and a time required to change a parameter of each of the transmission signal processing blocks, identify a minimum switching time of the terminal and transmit information on the minimum switching time of the terminal to the base station.

According to an example embodiment, when identifying the minimum switching time of the terminal, the terminal may identify a type with a fewest number among the transmission signal processing blocks and determine a longest time among times required to change a parameter of each of transmission signal processing blocks of the identified type to be the minimum switching time of the terminal.

In operation S1220, the terminal may activate, based on transmission configuration information received from the base station, at least one of a plurality of second transmission signal processing blocks included in a second transmission signal processing block group.

According to an example embodiment, the plurality of second transmission signal processing blocks may include a second encoding block, a second modulation block, a second digital signal filtering block, a second DAC block, a second RFIC block, a second PA block, a second antenna block, and a second power supply block, and when activating at least one of the plurality of second transmission signal processing blocks, the terminal may be configured to activate the second encoding block, the second modulation block, the second digital signal filtering block, the second DAC block, the second RFIC block, the second PA block, the second antenna block, and the second power supply block, and when transmitting a second signal to the base station, the terminal may be configured to deactivate, in response to completion of the transmitting of the first signal, the first encoding block, the first modulation block, the first digital signal filtering block, the first DAC block, the first RFIC block, the first PA block, the first antenna block, and the first power supply block and transmit, at a time point that is set based on scheduling information, the second signal to the base station through the second encoding block, the second modulation block, the second digital signal filtering block, the second DAC block, the second RFIC block, the second PA block, the second antenna block, and the second power supply block.

According to an example embodiment, the plurality of second transmission signal processing blocks may include a second encoding block, a second modulation block, the first digital signal filtering block, the first DAC block, the first RFIC block, the first PA block, the first antenna block, and the first power supply block, and when activating at least one of the plurality of second transmission signal processing blocks, the terminal may be configured to activate the second encoding block and the second modulation block, and when transmitting the second signal to the base station, the terminal may be configured to change, in response to completion of the transmitting of the first signal, a parameter of at least one of the first digital signal filtering block, the first DAC block, the first RFIC block, the first PA block, the first antenna block, and the first power supply block and transmit, at a time point that is set based on the scheduling information, the second signal to the base station through the second encoding block, the second modulation block, the first digital signal filtering block, the first DAC block, the first RFIC block, the first PA block, the first antenna block, and the first power supply block.

According to an example embodiment, the plurality of second transmission signal processing blocks may include a second encoding block, a second modulation block, a second digital signal filtering block, the first DAC block, the first RFIC block, the first PA block, the first antenna block, and the first power supply block, and when activating at least one of the plurality of second transmission signal processing blocks, the terminal may be configured to activate the second encoding block, the second modulation block, and the second digital signal filtering block, and when transmitting the second signal to the base station, the terminal may be configured to change, in response to completion of the transmitting of the first signal, a parameter of at least one of the first DAC block, the first RFIC block, the first PA block, the first antenna block, and the first power supply block and transmit, at a time point that is set based on the scheduling information, the second signal to the base station through the second encoding block, the second modulation block, the second digital signal filtering block, the first DAC block, the first RFIC block, the first PA block, the first antenna block, and the first power supply block.

According to an example embodiment, the plurality of second transmission signal processing blocks may include a second encoding block, a second modulation block, a second digital signal filtering block, a second DAC block, the first RFIC block, the first PA block, the first antenna block, and the first power supply block, and when activating at least one of the plurality of second transmission signal processing blocks, the terminal may be configured to activate the second encoding block, the second modulation block, the second digital signal filtering block, and the second DAC block, and when transmitting the second signal to the base station, the terminal may be configured to change, in response to completion of the transmitting of the first signal, a parameter of at least one of the first RFIC block, the first PA block, the first antenna block, and the first power supply block and transmit, at a time point that is set based on the scheduling information, the second signal to the base station through the second encoding block, the second modulation block, the second digital signal filtering block, the second DAC block, the first RFIC block, the first PA block, the first antenna block, and the first power supply block.

According to an example embodiment, the plurality of second transmission signal processing blocks may include a second encoding block, a second modulation block, a second digital signal filtering block, a second DAC block, a second RFIC block, the first PA block, the first antenna block, and the first power supply block, and when activating at least one of the plurality of second transmission signal processing blocks, the terminal may be configured to activate the second encoding block, the second modulation block, the second digital signal filtering block, the second DAC block, and the second RFIC block, and when transmitting the second signal to the base station, the terminal may be configured to change, in response to completion of the transmitting of the first signal, a parameter of at least one of the first PA block, the first antenna block, and the first power supply block and transmit, at a time point that is set based on the scheduling information, the second signal to the base station through the second encoding block, the second modulation block, the second digital signal filtering block, the second DAC block, the second RFIC block, the first PA block, the first antenna block, and the first power supply block.

According to an example embodiment, the plurality of second transmission signal processing blocks may include a second encoding block, a second modulation block, a second digital signal filtering block, a second DAC block, a second RFIC block, a second PA block, the first antenna block, and the first power supply block, and when activating at least one of the plurality of second transmission signal processing blocks, the terminal may be configured to activate the second encoding block, the second modulation block, the second digital signal filtering block, the second DAC block, the second RFIC block, and the second PA block, and when transmitting the second signal to the base station, the terminal may be configured to change, in response to completion of the transmitting of the first signal, a parameter of at least one of the first antenna block and the first power supply block and transmit, at a time point that is set based on the scheduling information, the second signal to the base station through the second encoding block, the second modulation block, the second digital signal filtering block, the second DAC block, the second RFIC block, the second PA block, the first antenna block, and the first power supply block.

According to an example embodiment, the plurality of second transmission signal processing blocks may include a second encoding block, a second modulation block, a second digital signal filtering block, a second DAC block, a second RFIC block, a second PA block, a second antenna block, and the first power supply block, and when activating at least one of the plurality of second transmission signal processing blocks, the terminal may be configured to activate the second encoding block, the second modulation block, the second digital signal filtering block, the second DAC block, the second RFIC block, the second PA block, and the second antenna block, and when transmitting the second signal to the base station, the terminal may be configured to change, in response to completion of the transmitting of the first signal, a parameter of the first power supply block and transmit, at a time point that is set based on the scheduling information, the second signal to the base station through the second encoding block, the second modulation block, the second digital signal filtering block, the second DAC block, the second RFIC block, the second PA block, the second antenna block, and the first power supply block.

According to an example embodiment, the terminal may be configured to, based on information on a number of encoding blocks, a number of modulation blocks, a number of digital signal filtering blocks, a number of DAC blocks, a number of RFIC blocks, a number of PA blocks, a number of antenna blocks, and a number of power supply blocks among the transmission signal processing blocks and a time required to change a parameter of each of the transmission signal processing blocks, determine the plurality of second transmission signal processing blocks to transmit the second signal at a time point that is set based on the scheduling information.

In operation S1240, the terminal transmits, in response to completion of the transmitting of the first signal through the first transmission signal processing block group, a second signal associated with the first signal to the base station through the second transmission signal processing block group based on scheduling information received from the base station.

According to an example embodiment, the scheduling information may be determined based on the information on the minimum switching time of the terminal.

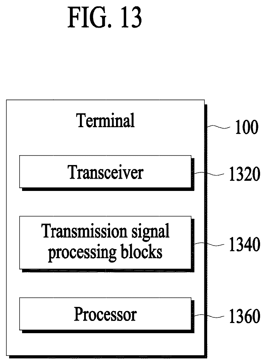

FIG. 13 shows a block diagram of the terminal 100, according to an example embodiment.

According to an example embodiment, the terminal 100 may include a transceiver 1320, transmission signal processing blocks 1340, and a processor 1360. In the terminal 100 of FIG. 13, only elements related to the example embodiments may be illustrated. Therefore, it may be understood by those of ordinary skill in the art to which the example embodiments pertain that other general-purpose elements may be further included in addition to the elements illustrated in FIG. 13. In example embodiments, the transceiver 1320 may be included in a communication device. Further, in example embodiments, the processor 1360 may be included in a controller.

The transceiver 1320 may be and/or may include a device for performing wired and/or wireless communications and may communicate with an external electronic apparatus. The external electronic apparatus may be and/or may include a terminal, a server, or the like. Furthermore, a communication technology used by the transceiver 1320 may include, but not be limited to, a global system for mobile communication (GSM), code division multi-access (CDMA), long term evolution (LTE), fifth generation (5G), wireless local area network (WLAN), wireless-fidelity (Wi-Fi), Bluetooth^{™}, radio frequency identification (RFID), infrared data association (IrDA), ZigBee, near field communication (NFC), or the like.

The transmission signal processing blocks 1340 may be and/or may include a module and/or an element that performs a variety of processing for transmitting signals and may be included in a modem within the terminal 100 and/or be included as a component of the processor 1360, but is not be limited thereto, and may be present outside the modem.

The processor 1360 may control overall operations of the terminal 100 and process data and signals. The processor 1360 may include at least one hardware unit. Furthermore, the processor 1360 may operate by one or more software modules generated by executing program codes stored in a buffer. The processor 1360 may include a memory, and the processor 1360 may control the overall operations of the terminal 100 and process data and signals by executing program codes stored in the memory. For example, the memory may store various instructions executable through the processor 1360. By way of example, the instructions may be executed by one or more processors 1360 individually or collectively.

In an embodiment the processor 1360 is configured to transmit a first signal to a base station through a first transmission signal processing block group including a plurality of first transmission signal processing blocks among transmission signal processing blocks, activate, based on transmission configuration information received from the base station, at least one of a plurality of second transmission signal processing blocks included in a second transmission signal processing block group, and transmit, in response to completion of the transmitting of the first signal through the first transmission signal processing block group, a second signal associated with the first signal to the base station through the second transmission signal processing block group based on scheduling information received from the base station.

The terminal, according to the above-described example embodiments, may include, a processor, a memory for storing and executing program data, a permanent storage such as a disk drive, a communication port that communicates with an external device, and a user interface device such as a touch panel, a key, and a button. Methods implemented by software modules or algorithms may be stored in a computer-readable recording medium as computer-readable codes or program instructions executable on the processor. Here, the computer-readable recording medium includes a magnetic storage medium (e.g., read-only memory (ROM), random-access memory (RAM), floppy disks, and hard disks) and an optically readable medium (e.g., compact disc read-only memory (CD-ROM) and digital versatile discs (DVDs)). The computer-readable recording medium may be distributed among network-connected computer systems, so that the computer-readable codes may be stored and executed in a distributed manner. The medium may be readable by a computer, stored in a memory, and executed on a processor.

The example embodiments may be represented by functional block elements and various processing steps and/or operations. The functional blocks may be implemented in any number of hardware and/or software configurations that perform specific functions. For example, an example embodiment may adopt integrated circuit configurations, such as memory, processing, logic, and/or look-up table, which may execute various functions by the control of one or more microprocessors or other control devices. Similar to elements being implemented as software programming or software elements, the example embodiments may be implemented in a programming or scripting language such as C, C++, Java, and assembler, including various algorithms implemented as a combination of data structures, processes, routines, or other programming constructs. Functional aspects may be implemented in an algorithm running on one or more processors. Further, the example embodiments may adopt the existing art for electronic environment setting, signal processing, and/or data processing. Terms such as "mechanism," "element," "means," and "configuration" may be used broadly and may are not be limited to mechanical and physical configurations. The terms may include the meaning of a series of routines of software in association with a processor or the like.

The above-described example embodiments are merely examples, and other example embodiments may be implemented within the scope of the claims.

## Claims

1. A terminal comprising:
a transceiver (1320);
transmission signal processing blocks (1340) comprising a plurality of first transmission signal processing blocks in a first transmission signal processing block group (300; 340) and a plurality of second transmission signal processing blocks in a second transmission signal processing block group (320); and
a processor (1360),
wherein the processor (1360) is configured to:
transmit, to a base station (200), a first signal through the first transmission signal processing block group (300; 340);
activate, based on transmission configuration information received from the base station (200), at least one of the plurality of second transmission signal processing blocks; and
based on completion of the transmitting of the first signal, transmit, to the base station (200), a second signal associated with the first signal through the second transmission signal processing block group (320), based on scheduling information received from the base station (200).

2. The terminal of claim 1, wherein the plurality of first transmission signal processing blocks comprises, a first encoding block, a first modulation block, a first digital signal filtering block, a first digital-to-analog conversion (DAC) block, a first radio frequency integrated circuit (RFIC) block, a first power amplifying (PA) block, a first antenna block, and a first power supply block.

3. The terminal of claim 2, wherein the plurality of second transmission signal processing blocks comprises, a second encoding block, a second modulation block, a second digital signal filtering block, a second DAC block, a second RFIC block, a second PA block, a second antenna block, and a second power supply block,
wherein, when activating the at least one of the plurality of second transmission signal processing blocks, the processor (1360) is configured to activate the second encoding block, the second modulation block, the second digital signal filtering block, the second DAC block, the second RFIC block, the second PA block, the second antenna block, and the second power supply block, and
wherein, when transmitting the second signal to the base station (200), the processor (1360) is configured to:
deactivate, based on the completion of the transmitting of the first signal, the first encoding block, the first modulation block, the first digital signal filtering block, the first DAC block, the first RFIC block, the first PA block, the first antenna block, and the first power supply block; and
transmit, to the base station (200) at a predetermined time point, the second signal through the second encoding block, the second modulation block, the second digital signal filtering block, the second DAC block, the second RFIC block, the second PA block, the second antenna block, and the second power supply block, the predetermined time point being set based on the scheduling information.

4. The terminal of claim 2, wherein the plurality of second transmission signal processing blocks comprises, a second encoding block, a second modulation block, the first digital signal filtering block, the first DAC block, the first RFIC block, the first PA block, the first antenna block, and the first power supply block,
wherein, when activating at least one of the plurality of second transmission signal processing blocks, the processor (1360) is configured to activate the second encoding block and the second modulation block, and
wherein, when transmitting the second signal to the base station (200), the processor (1360) is configured to:
change, based on the completion of the transmitting of the first signal, a parameter of at least one of the first digital signal filtering block, the first DAC block, the first RFIC block, the first PA block, the first antenna block, and the first power supply block; and
transmit, to the base station (200) at a predetermined time point, the second signal through the second encoding block, the second modulation block, the first digital signal filtering block, the first DAC block, the first RFIC block, the first PA block, the first antenna block, and the first power supply block, the predetermined time point being set based on the scheduling information.

5. The terminal of claim 2, wherein the plurality of second transmission signal processing blocks comprises, a second encoding block, a second modulation block, a second digital signal filtering block, the first DAC block, the first RFIC block, the first PA block, the first antenna block, and the first power supply block,
wherein, when activating at least one of the plurality of second transmission signal processing blocks, the processor (1360) is configured to activate the second encoding block, the second modulation block, and the second digital signal filtering block, and
wherein, when transmitting the second signal to the base station (200), the processor (1360) is configured to:
change, based on the completion of the transmitting of the first signal, a parameter of at least one of the first DAC block, the first RFIC block, the first PA block, the first antenna block, and the first power supply block; and
transmit, to the base station (200) at a predetermined time point, the second signal through the second encoding block, the second modulation block, the second digital signal filtering block, the first DAC block, the first RFIC block, the first PA block, the first antenna block, and the first power supply block, the predetermined time point being set based on the scheduling information.

6. The terminal of claim 2, wherein the plurality of second transmission signal processing blocks comprises, a second encoding block, a second modulation block, a second digital signal filtering block, a second DAC block, the first RFIC block, the first PA block, the first antenna block, and the first power supply block,
wherein, when activating at least one of the plurality of second transmission signal processing blocks, the processor (1360) is configured to activate the second encoding block, the second modulation block, the second digital signal filtering block, and the second DAC block, and
wherein, when transmitting the second signal to the base station (200), the processor (1360) is configured to:
change, based on the completion of the transmitting of the first signal, a parameter of at least one of the first RFIC block, the first PA block, the first antenna block, and the first power supply block; and
transmit, to the base station (200) at a predetermined time point, the second signal through the second encoding block, the second modulation block, the second digital signal filtering block, the second DAC block, the first RFIC block, the first PA block, the first antenna block, and the first power supply block, the predetermined time point being set based on the scheduling information.

7. The terminal of claim 2, wherein the plurality of second transmission signal processing blocks comprises, a second encoding block, a second modulation block, a second digital signal filtering block, a second DAC block, a second RFIC block, the first PA block, the first antenna block, and the first power supply block,
wherein, when activating at least one of the plurality of second transmission signal processing blocks, the processor (1360) is configured to activate the second encoding block, the second modulation block, the second digital signal filtering block, the second DAC block, and the second RFIC block, and
wherein, when transmitting the second signal to the base station (200) , the processor (1360) is configured to:
change, based on the completion of the transmitting of the first signal, a parameter of at least one of the first PA block, the first antenna block, and the first power supply block; and
transmit, to the base station (200) at a predetermined time point, the second signal through the second encoding block, the second modulation block, the second digital signal filtering block, the second DAC block, the second RFIC block, the first PA block, the first antenna block, and the first power supply block, the predetermined time point being set based on the scheduling information.

8. The terminal of claim 2, wherein the plurality of second transmission signal processing blocks comprises, a second encoding block, a second modulation block, a second digital signal filtering block, a second DAC block, a second RFIC block, a second PA block, the first antenna block, and the first power supply block,
wherein, when activating at least one of the plurality of second transmission signal processing blocks, the processor (1360) is configured to activate the second encoding block, the second modulation block, the second digital signal filtering block, the second DAC block, the second RFIC block, and the second PA block, and
wherein, when transmitting the second signal to the base station (200), the processor (1360) is configured to:
change, based on the completion of the transmitting of the first signal, a parameter of at least one of the first antenna block and the first power supply block; and
transmit, to the base station (200) at a predetermined time point, the second signal through the second encoding block, the second modulation block, the second digital signal filtering block, the second DAC block, the second RFIC block, the second PA block, the first antenna block, and the first power supply block, the predetermined time point being set based on the scheduling information.

9. The terminal of claim 2, wherein the plurality of second transmission signal processing blocks comprises, a second encoding block, a second modulation block, a second digital signal filtering block, a second DAC block, a second RFIC block, a second PA block, a second antenna block, and the first power supply block,
wherein, when activating at least one of the plurality of second transmission signal processing blocks, the processor (1360) is configured to activate the second encoding block, the second modulation block, the second digital signal filtering block, the second DAC block, the second RFIC block, the second PA block, and the second antenna block, and
wherein, when transmitting the second signal to the base station (200), the processor (1360) is configured to:
change, based on the completion of the transmitting of the first signal, a parameter of the first power supply block; and
transmit, to the base station (200) at a predetermined time point, the second signal through the second encoding block, the second modulation block, the second digital signal filtering block, the second DAC block, the second RFIC block, the second PA block, the second antenna block, and the first power supply block, the predetermined time point being set based on the scheduling information.

10. The terminal of any one of claims 1 to 9, wherein the processor (1360) is configured to:
based on information on a number of encoding blocks, a number of modulation blocks, a number of digital signal filtering blocks, a number of digital-to-analog conversion (DAC) blocks, a number of radio frequency integrated circuit (RFIC) blocks, a number of power amplifying (PA) blocks, a number of antenna blocks, a number of power supply blocks from among the transmission signal processing blocks (1340), and a time required to change a parameter of each of the transmission signal processing blocks (1340), identify a minimum switching time of the terminal (100); and
transmit, to the base station (200), information on the minimum switching time of the terminal (100).

11. The terminal of claim 10, wherein, when identifying the minimum switching time of the terminal (100), the processor (1360) is configured to:
identify a type of transmission signal processing block having a minimum number from among the number of encoding blocks, the number of modulation blocks, the number of digital signal filtering blocks, the number of DAC blocks, the number of RFIC blocks, the number of PA blocks, the number of antenna blocks, and the number of power supply blocks; and
determine a maximum time from among times required to change a parameter of each of the transmission signal processing blocks (1340) of the identified type as the minimum switching time of the terminal (100).

12. The terminal of claim 10 or 11, wherein the scheduling information is determined based on the information on the minimum switching time of the terminal (100).

13. The terminal of any one of claims 1 to 12, wherein the processor (1360) is configured to:
based on information on a number of encoding blocks, a number of modulation blocks, a number of digital signal filtering blocks, a number of digital-to-analog conversion (DAC) blocks, a number of radio frequency integrated circuit (RFIC) blocks, a number of power amplifying PA blocks, a number of antenna blocks, and a number of power supply blocks among the transmission signal processing blocks (1340) and a time required to change a parameter of each of the transmission signal processing blocks (1340), determine the plurality of second transmission signal processing blocks to transmit the second signal at a time point that is set based on the scheduling information.

14. An operation method of a terminal, the operation method comprising:
transmitting, to a base station (200), a first signal through a first transmission signal processing block group (300; 340) comprising a plurality of first transmission signal processing blocks from among transmission signal processing blocks (1340) of the terminal (100);
activating, based on transmission configuration information received from the base station (200), at least one of a plurality of second transmission signal processing blocks comprised in a second transmission signal processing block group (320) of the terminal (100); and
based on completing the transmitting of the first signal, transmitting, to the base station (200), a second signal associated with the first signal through the second transmission signal processing block group (320) based on scheduling information received from the base station (200).

15. A wireless communication system comprising:
a terminal (100) comprising transmission signal processing blocks (1340) comprising a plurality of first transmission signal processing blocks in a first transmission signal processing block group (300; 340) and a plurality of second transmission signal processing blocks in a second transmission signal processing block group (320); and
a base station (200),
wherein the base station (200) is configured to transmit transmission configuration information and scheduling information to the terminal (100), and
wherein the terminal (100) is configured to:
transmit, to the base station (200), a first signal through the first transmission signal processing block group (300; 340);
activate, based on the transmission configuration information received from the base station (200), at least one of the plurality of second transmission signal processing blocks; and
based on completion of the transmitting of the first signal, transmit, to the base station (200), a second signal associated with the first signal through the second transmission signal processing block group (320), based on the scheduling information received from the base station (200).

## Amended claims

### Amended claims in accordance with Rule 137(2) EPC.

1. A terminal comprising:
a transceiver (1320);
transmission signal processing blocks (1340) comprising a plurality of first transmission signal processing blocks in a first transmission signal processing block group (400; 500; 600; 700; 800; 900; 1000) and a plurality of second transmission signal processing blocks in a second transmission signal processing block group (420; 520; 620; 720; 820; 920; 1020); and
a processor (1360),
wherein the processor (1360) is configured to:
transmit, to a base station (200) via the transceiver (1320), a first signal through the first transmission signal processing block group (300; 340) and
perform transmission switching to transmit a second signal associated with the first signal to the base station via the transceiver (1320) through the second transmission signal processing block group (420; 520; 620; 720; 820; 920; 1020);
**characterized in that** the transmission switching comprises:
determining, based on transmission configuration information received from the base station (200), the second transmission signal processing block group (420; 520; 620; 720; 820; 920; 1020) for transmitting the second signal,
wherein the plurality of second transmission signal processing blocks includes:
one or more third transmission signal processing blocks that are not used for transmitting the first signal through the first transmission signal processing block group (400; 500; 600; 700; 800; 900; 1000); and
one or more fourth transmission signal processing blocks that are included in the first transmission signal processing block group (400; 500; 600; 700; 800; 900; 1000) and each have a type different from types of the one or more third transmission signal processing blocks;
activating, based on transmission configuration information received from the base station (200), the one or more third transmission signal processing blocks; and
based on completion of the transmitting of the first signal, changing one or more parameters of at least one of the one or more fourth transmission signal processing blocks; and
transmitting to the base station (200) via the transceiver (1320), the second signal through the second transmission signal processing block group (320), based on scheduling information received from the base station (200).

2. The terminal of claim 1, wherein the plurality of first transmission signal processing blocks comprises, a first encoding block, a first modulation block, a first digital signal filtering block, a first DAC block, a first RFIC block, a first PA block, a first antenna block, and a first power supply block.

3. The terminal of claim 2, wherein the plurality of second transmission signal processing blocks comprises, a second encoding block, a second modulation block, the first digital signal filtering block, the first DAC block, the first RFIC block, the first PA block, the first antenna block, and the first power supply block,
wherein, when activating the one or more third transmission signal processing blocks, the processor (1360) is configured to activate the second encoding block and the second modulation block,
wherein, when changing the one or more parameters of the at least one of the one or more fourth transmission signal processing blocks, the processor (1360) is configured to change, based on the completion of the transmitting of the first signal, one or more parameters of at least one of the first digital signal filtering block, the first DAC block, the first RFIC block, the first PA block, the first antenna block, and the first power supply block, and
wherein, when transmitting the second signal to the base station (200), the processor (1360) is configured to:
transmit, to the base station (200) at a predetermined time point, the second signal through the second encoding block, the second modulation block, the first digital signal filtering block, the first DAC block, the first RFIC block, the first PA block, the first antenna block, and the first power supply block, the predetermined time point being set based on the scheduling information.

4. The terminal of claim 2, wherein the plurality of second transmission signal processing blocks comprises, a second encoding block, a second modulation block, a second digital signal filtering block, the first DAC block, the first RFIC block, the first PA block, the first antenna block, and the first power supply block,
wherein, when activating the one or more third transmission signal processing blocks, the processor (1360) is configured to activate the second encoding block, the second modulation block, and the second digital signal filtering block,
wherein, when changing the one or more parameters of the at least one of the one or more fourth transmission signal processing blocks, the processor (1360) is configured to change, based on the completion of the transmitting of the first signal, one or more parameters of at least one of the first DAC block, the first RFIC block, the first PA block, the first antenna block, and the first power supply block, and
wherein, when transmitting the second signal to the base station (200), the processor (1360) is configured to:
transmit, to the base station (200) at a predetermined time point, the second signal through the second encoding block, the second modulation block, the second digital signal filtering block, the first DAC block, the first RFIC block, the first PA block, the first antenna block, and the first power supply block, the predetermined time point being set based on the scheduling information.

5. The terminal of claim 2, wherein the plurality of second transmission signal processing blocks comprises, a second encoding block, a second modulation block, a second digital signal filtering block, a second DAC block, the first RFIC block, the first PA block, the first antenna block, and the first power supply block,
wherein, when activating the one or more third transmission signal processing blocks, the processor (1360) is configured to activate the second encoding block, the second modulation block, the second digital signal filtering block, and the second DAC block,
wherein, when changing the one or more parameters of the at least one of the one or more fourth transmission signal processing blocks, the processor (1360) is configured to change, based on the completion of the transmitting of the first signal, one or more parameters of at least one of the first RFIC block, the first PA block, the first antenna block, and the first power supply block,
wherein, when transmitting the second signal to the base station (200), the processor (1360) is configured to:
transmit, to the base station (200) at a predetermined time point, the second signal through the second encoding block, the second modulation block, the second digital signal filtering block, the second DAC block, the first RFIC block, the first PA block, the first antenna block, and the first power supply block, the predetermined time point being set based on the scheduling information.

6. The terminal of claim 2, wherein the plurality of second transmission signal processing blocks comprises, a second encoding block, a second modulation block, a second digital signal filtering block, a second DAC block, a second RFIC block, the first PA block, the first antenna block, and the first power supply block,
wherein, when activating the one or more third transmission signal processing blocks, the processor (1360) is configured to activate the second encoding block, the second modulation block, the second digital signal filtering block, the second DAC block, and the second RFIC block,
wherein, when changing the one or more parameters of the at least one of the one or more fourth transmission signal processing blocks, the processor (1360) is configured to change, based on the completion of the transmitting of the first signal, one or more parameters of at least one of the first PA block, the first antenna block, and the first power supply block,
wherein, when transmitting the second signal to the base station (200), the processor (1360) is configured to:
transmit, to the base station (200) at a predetermined time point, the second signal through the second encoding block, the second modulation block, the second digital signal filtering block, the second DAC block, the second RFIC block, the first PA block, the first antenna block, and the first power supply block, the predetermined time point being set based on the scheduling information.

7. The terminal of claim 2, wherein the plurality of second transmission signal processing blocks comprises, a second encoding block, a second modulation block, a second digital signal filtering block, a second DAC block, a second RFIC block, a second PA block, the first antenna block, and the first power supply block,
wherein, when activating the one or more third transmission signal processing blocks, the processor (1360) is configured to activate the second encoding block, the second modulation block, the second digital signal filtering block, the second DAC block, the second RFIC block, and the second PA block,
wherein, when changing the one or more parameters of the at least one of the one or more fourth transmission signal processing blocks, the processor (1360) is configured to change, based on the completion of the transmitting of the first signal, one or more parameters of at least one of the first antenna block and the first power supply block, and
wherein, when transmitting the second signal to the base station (200), the processor (1360) is configured to:
transmit, to the base station (200) at a predetermined time point, the second signal through the second encoding block, the second modulation block, the second digital signal filtering block, the second DAC block, the second RFIC block, the second PA block, the first antenna block, and the first power supply block, the predetermined time point being set based on the scheduling information.

8. The terminal of claim 2, wherein the plurality of second transmission signal processing blocks comprises, a second encoding block, a second modulation block, a second digital signal filtering block, a second DAC block, a second RFIC block, a second PA block, a second antenna block, and the first power supply block,
wherein, when activating the one or more third transmission signal processing blocks, the processor (1360) is configured to activate the second encoding block, the second modulation block, the second digital signal filtering block, the second DAC block, the second RFIC block, the second PA block, and the second antenna block,
wherein, when changing the one or more parameters of the at least one of the one or more fourth transmission signal processing blocks, the processor (1360) is configured to change, based on the completion of the transmitting of the first signal, one or more parameters of the first power supply block, and
wherein, when transmitting the second signal to the base station (200), the processor (1360) is configured to:
transmit, to the base station (200) at a predetermined time point, the second signal through the second encoding block, the second modulation block, the second digital signal filtering block, the second DAC block, the second RFIC block, the second PA block, the second antenna block, and the first power supply block, the predetermined time point being set based on the scheduling information.

9. The terminal of any one of claims 1 to 8, wherein the processor (1360) is configured to:
based on information on a number of encoding blocks, a number of modulation blocks, a number of digital signal filtering blocks, a number of digital-to-analog conversion (DAC) blocks, a number of radio frequency integrated circuit (RFIC) blocks, a number of power amplifying (PA) blocks, a number of antenna blocks, a number of power supply blocks from among the transmission signal processing blocks (1340), and a time required to change a parameter of each of the transmission signal processing blocks (1340), identify a minimum switching time of the terminal (100); and
transmit, to the base station (200), information on the minimum switching time of the terminal (100).

10. The terminal of any one of claims 1 to 9, wherein, when identifying the minimum switching time of the terminal (100), the processor (1360) is configured to:
identify a type of transmission signal processing block having a minimum number from among the number of encoding blocks, the number of modulation blocks, the number of digital signal filtering blocks, the number of DAC blocks, the number of RFIC blocks, the number of PA blocks, the number of antenna blocks, and the number of power supply blocks; and
determine a maximum time from among times required to change a parameter of each of the transmission signal processing blocks (1340) of the identified type as the minimum switching time of the terminal (100).

11. The terminal of claim 9 or 10, wherein the scheduling information is determined based on the information on the minimum switching time of the terminal (100).

12. The terminal of any one of claims 1 to 11, wherein when determining the second transmission signal processing block group (420; 520; 620; 720; 820; 920; 1020), the processor (1360) is configured to:
based on information on a number of encoding blocks, a number of modulation blocks, a number of digital signal filtering blocks, a number of digital-to-analog conversion (DAC) blocks, a number of radio frequency integrated circuit (RFIC) blocks, a number of power amplifying PA blocks, a number of antenna blocks, and a number of power supply blocks among the transmission signal processing blocks (1340) and a time required to change a parameter of each of the transmission signal processing blocks (1340), determine the plurality of second transmission signal processing blocks to transmit the second signal at a time point that is set based on the scheduling information.

13. An operation method of a terminal as claimed in any one of claims 1 to 12, the operation method comprising:
transmitting, to a base station (200), a first signal through a first transmission signal processing block group (400; 500; 600; 700; 800; 900; 1000) comprising a plurality of first transmission signal processing blocks from among transmission signal processing blocks (1340) of the terminal (100); and
performing transmission switching, wherein the transmission switching comprises:
determining, based on transmission configuration information received from the base station (200), a second transmission signal processing block group (420; 520; 620; 720; 820; 920; 1020) for transmitting a second signal associated with the first signal,
wherein the plurality of second transmission signal processing blocks includes:
one or more third transmission signal processing blocks that are not used for transmitting the first signal through the first transmission signal processing block group (400; 500; 600; 700; 800; 900; 1000); and
one or more fourth transmission signal processing blocks that are included in the first transmission signal processing block group (400; 500; 600; 700; 800; 900; 1000) and each have a type different from types of the one or more third transmission signal processing blocks;
activating, based on the transmission configuration information received from the base station (200) in response to the information on the minimum switching time of the terminal (100), the one or more third transmission signal processing blocks;
based on completing the transmitting of the first signal, changing one or more parameters of at least one of the one or more fourth transmission signal processing blocks; and
transmitting, to the base station (200), the second signal through the second transmission signal processing block group (420; 520; 620; 720; 820; 920; 1020) based on scheduling information received from the base station (200).

14. A wireless communication system comprising:
a terminal (100) as claimed in any one of claims 1 to 12; and
a base station (200),
wherein the base station (200) is configured to transmit transmission configuration information and scheduling information to the terminal (100).
